# EUROPEAN PATENT APPLICATION

(11) **EP 4 044 707 A1**
(43) Date of publication of application: **17.08.2022**
(21) Application number: 19948084.9
(22) Date of filing: 08.11.2019
(51) Int. Cl.: H04W 72/00

(54) **DYNAMIC RESOURCE INDICATION METHOD AND APPARATUS**

(30) Priority: 30.09.2019 WO PCT/CN2019/109764; 23.10.2019 WO PCT/CN2019/112787
(71) Applicant: Huawei Technologies Co., Ltd., Longgang District Shenzhen, Guangdong 518129 (CN)
(72) Inventor: LIU, Fengwei, Shenzhen, Guangdong 518129 (CN); SONG, Xinghua, Shenzhen, Guangdong 518129 (CN); MAO, Qiqi, Shenzhen, Guangdong 518129 (CN); QIU, Jing, Shenzhen, Guangdong 518129 (CN)
(74) Representative: Gill Jennings & Every LLP
(86) International application number: PCT/CN2019/116720
(87) International publication number: WO 2021/062918

(57) **Abstract**

A resource dynamic indication method and an apparatus are provided, to implement dynamic resource indication when an MT includes a plurality of carriers and a DU includes a plurality of cells. The method includes: A first node determines, based on first indication information sent by a second node or a donor node, semi-static resource configuration on first resources corresponding to D carriers and second resources corresponding to F cells. The first node determines, based on second indication information sent by the second node or the donor node, an availability status of an available resource in the first resources corresponding to the D carriers and an availability status of a dynamic resource in the second resources corresponding to the F cells.

## Description

### TECHNICAL FIELD

This application relates to the field of communication technologies, and in particular, to a resource dynamic indication method and an apparatus.

### BACKGROUND

With continuous development of mobile communication technologies, spectrum resources are increasingly strained. Base stations will be deployed more densely in the future to improve spectrum utilization. In addition, dense deployment may avoid a coverage hole. In a conventional cellular network architecture, a base station is connected to a core network through an optical fiber. However, deployment costs of optical fibers are very high in many application scenarios. A wireless relay node (relay node, RN) establishes a connection to the core network through a wireless backhaul link, to reduce a part of the deployment costs of optical fibers.

Usually, the relay node RN establishes a wireless backhaul link to one or more parent nodes, and accesses the core network through the parent node. The parent node can control the relay node by using a plurality of types of signaling (for example, data scheduling, timing modulation, power control). In addition, the relay node may further provide services for a plurality of child nodes. The parent node of the relay node may be a base station or another relay node. The child node of the relay node may be another relay node or a terminal device (user equipment, UE). In some cases, the parent node may also be referred to as an upstream node, and the child node may also be referred to as a downstream node.

In-band relay is a relay solution in which a backhaul link and an access link share a same frequency band. Because no additional spectrum resource is used, the in-band relay has advantages such as high spectral efficiency and low deployment costs. The in-band relay generally has a half-duplex constraint. Specifically, when receiving a downlink signal sent by a parent node of the relay node, the relay node cannot send a downlink signal to a child node of the relay node, and when receiving an uplink signal sent by the child node of the relay node, the relay node cannot send an uplink signal to the parent node of the relay node. An in-band relay solution of a new generation wireless communication system (new radio, NR) is referred to as integrated access and backhaul (integrated access and backhaul, IAB), and the relay node is generally referred to as an IAB node (IAB node).

The IAB node includes a termination (mobile termination, MT) function and a distributed unit (distributed unit, DU) function. The termination function, referred to as a terminal unit for short below, specifically refers to a function/module that camps on the IAB node, and is used to distinguish from a terminal device UE that may be used as a child node in this application. The MT is used by the IAB node to communicate with a parent node, and the DU is used by the IAB node to communicate with a child node. The child node may be a terminal device UE, or may be another IAB node. A link for communication between the MT and the parent node is referred to as a parent backhaul link (parent BH link), a link for communication between the DU and a child IAB node is referred to as a child backhaul link (child BH link), and a link for communication between the DU and a child UE node is referred to as an access link (access link).

In some deployment scenarios, the DU of the IAB node may include a plurality of cells (cells), and different cells of the DU may be sectors in different directions, or may be carriers in different frequency bands. Similarly, the MT of the IAB node may also include a plurality of carriers in different frequency bands. In a conventional technology, there is no dynamic resource indication method in which the MT of the IAB node includes the plurality of carriers and the DU includes the plurality of cells. This application provides a resource dynamic indication method, to implement dynamic resource share of a backhaul resource and an access resource.

### SUMMARY

This application provides a resource dynamic indication method, and resolves a dynamic resource indication problem when an MT of an IAB node includes a plurality of carriers and a DU of the IAB node includes a plurality of cells.

According to a first aspect, this application provides a resource dynamic indication method. The method includes: A first node receives first indication information sent by a second node or a donor node, where the first indication information is used to indicate semi-static resource configuration on first resources corresponding to D carriers in the first node and second resources corresponding to F cells in the first node, where D ≥ 1 and F ≥ 1. The first node determines, based on the first indication information, the semi-static resource configuration on the first resources corresponding to the D carriers and the second resources corresponding to the F cells. The first node receives second indication information sent by the second node, where the second indication information is used to indicate an availability status of an available resource in the first resources corresponding to the D carriers in the first node and an availability status of a dynamic resource in the second resources corresponding to the F cells in the first node. The first node determines, based on the second indication information, the availability status of the available resource in the first resources corresponding to the D carriers and the availability status of the dynamic resource in the second resources corresponding to the F cells.

In the foregoing technical solution, the second indication information sent by the second node may indicate the availability status of the available resource in the first resources corresponding to the D carriers and the availability status of the dynamic resource in the second resources corresponding to the F cells, and the first node may determine the cells and carriers to which the second indication information applies. In this case, the availability status of the available resource in the first resources corresponding to the D carriers and the availability status of the dynamic resource in the second resources corresponding to the F cells may be accurately indicated when the MT includes the plurality of carriers and the DU includes the plurality of cells.

With reference to the first aspect, in some implementations of the first aspect, the first node receives the second indication information sent by the second node, where the second indication information is used to indicate only the availability status of the available resource in the first resources corresponding to the D carriers in the first node. The first node determines, based on the second indication information, the availability status of the available resource in the first resources corresponding to the D carriers. The first node determines the availability status of the dynamic resource in the second resources corresponding to the F cells based on the availability status of the available resource in the first resources corresponding to the D carriers and resource multiplexing relationships between the first resources corresponding to the D carriers and the second resources corresponding to the F cells.

In the foregoing technical solution, a parent node of an IAB node may explicitly indicate MT resources of the IAB node, and availability of a DU soft resource may be derived based on a resource multiplexing or association relationship between each carrier of the MT and each cell of the DU.

With reference to the first aspect, in some implementations of the first aspect, the first node receives the second indication information sent by the second node, where the second indication information is used to indicate only the availability status of the dynamic resource in the second resources corresponding to the F cells in the first node. The first node determines, based on the second indication information, the availability status of the dynamic resource in the second resources corresponding to the F cells. The first node determines the availability status of the available resource in the first resources corresponding to the D carriers based on the availability status of the dynamic resource in the second resources corresponding to the F cells and the resource multiplexing relationships between the first resources corresponding to the D carriers and the second resources corresponding to the F cells.

According to the foregoing technical solution, the parent node of the IAB node may explicitly indicate the DU soft resource of the IAB node, and the availability of the MT resources may be derived based on the resource multiplexing or association relationship between each carrier of the MT and each cell of the DU.

With reference to the first aspect, in some implementations of the first aspect, the second node is a parent node of the first node, the first resources are transmission resources for communication between the first node and the second node, the second resources are transmission resources for communication between the first node and a third node, and the third node is a child node of the first node.

With reference to the first aspect, in some implementations of the first aspect, the available resource in the first resources is an available resource determined after the semi-static resource configuration is performed on the first resources.

In the foregoing technical solution, three resource types D/U/F of the MT resources may be obtained through the semi-static resource configuration.

With reference to the first aspect, in some implementations of the first aspect, the dynamic resource in the second resources is a dynamic resource determined after the semi-static resource configuration is performed on the second resources.

In the foregoing technical solution, three resource types D/U/F of the DU resources, hard/soft attributes (attributes) of the DU resources, and a time domain position of an unavailable resource (NA) may be obtained through the semi-static resource configuration.

With reference to the first aspect, in some implementations of the first aspect, the resource multiplexing relationships between the first resources corresponding to the D carriers and the second resources corresponding to the F cells include at least one of the following: time division multiplexing, half-duplex frequency division multiplexing, half-duplex space division multiplexing, full duplex, dynamic adaptive frequency division multiplexing, dynamic adaptive space division multiplexing, or dynamic adaptive full duplex.

In the foregoing technical solution, after obtaining a resource configuration of the DU, the IAB node and the parent node may derive available/unavailable resources of the IAB MT based on the foregoing resource multiplexing relationships. Alternatively, after obtaining the availability status of the MT available resource, the IAB node and the parent node may derive the availability status of the DU soft resource of the IAB node based on the foregoing resource multiplexing relationships. Alternatively, after obtaining the availability status of the DU soft resource, the IAB node and the parent node may derive the availability status of the MT available resource of the IAB node based on the foregoing resource multiplexing relationships.

With reference to the first aspect, in some implementations of the first aspect, an indication range of the second indication information includes at least one of the following: the available resource in the first resources determined through the semi-static resource configuration, a first to-be-indicated resource set including a resource that is determined by specified G cells in the F cells and that has the resource multiplexing relationship with the G cells, a second to-be-indicated resource set including a part of resources that are indicated by the second node or the donor node and that are in the first resources, or a third to-be-indicated resource set including all resources that are indicated by the second node or the donor node and that are in the first resources.

With reference to the first aspect, in some implementations of the first aspect, the second indication information includes identifiers of the D carriers and/or identifiers of the F cells.

With reference to the first aspect, in some implementations of the first aspect, the second indication information is downlink control information DCI.

With reference to the first aspect, in some implementations of the first aspect, the downlink control information DCI further includes at least one type of the following information: control resource set information, search space set information, indication delay information, or indication range information.

According to a second aspect, this application provides a relay apparatus. The relay apparatus has a function of implementing the method in any one of the first aspect and the possible implementations of the first aspect. The function may be implemented by hardware, or may be implemented by hardware executing corresponding software. The hardware or the software includes one or more units corresponding to the foregoing functions.

According to a third aspect, this application provides a computer-readable storage medium. The computer-readable storage medium stores computer instructions, and when the computer instructions are run on a computer, the computer is enabled to perform the method according to any one of the first aspect or the possible implementations of the first aspect.

According to a fourth aspect, this application provides a chip, including a processor. The processor is configured to read and execute a computer program stored in a memory, to perform the method according to any one of the first aspect or the possible implementations of the first aspect.

Optionally, the chip further includes the memory, the memory and the processor are connected through a circuit or a wire, and the memory is configured to store the computer program.

Further, optionally, the chip further includes a communication interface.

According to a fifth aspect, this application further provides a computer program product. The computer program product includes computer program code; and when the computer program code is run on a computer, the computer is enabled to perform the method according to any one of the first aspect or the possible implementations of the first aspect.

According to the dynamic resource indication method provided in this application, an availability status of an MT available resource of an IAB node may be explicitly or implicitly indicated by using indication of dynamic resource signaling, and an availability status of a DU soft resource of the IAB node may be explicitly or implicitly indicated. In a scenario in which the MT has a plurality of carriers and the DU has a plurality of cells, dynamic sharing of MT resources and DU resources of the IAB node may be implemented.

### BRIEF DESCRIPTION OF DRAWINGS

FIG. 1 is a diagram of an architecture of an IAB system applicable to an embodiment of this application;
FIG. 2 shows a simple example of an IAB system according to an embodiment of this application;
FIG. 3 is a schematic diagram of an access link and a backhaul link according to an embodiment of this application;
FIG. 4 is a schematic diagram of a structure of an IAB node according to an embodiment of this application;
FIG. 5 is a schematic diagram of a logic of an MT and a DU according to an embodiment of this application;
FIG. 6 is another schematic diagram of an access link and a backhaul link according to an embodiment of this application;
FIG. 7 shows a method for configuring a backhaul resource in an LTE relay system;
FIG. 8 is a schematic diagram of an example of resource configuration in an NR IAB system;
FIG. 9 is a schematic diagram of relationships between DU resources of a plurality of cells and MT resources according to an embodiment of this application;
FIG. 10 is a flowchart of a resource dynamic indication method according to an embodiment of this application;
FIG. 11 shows an example case in which an MT includes two carriers and a DU includes four cells according to an embodiment of this application;
FIG. 12 is a schematic diagram of a multiplexing or association relationship between a carrier of an MT and a cell of a DU according to an embodiment of this application;
FIG. 13 shows an example of a method for deriving an available/unavailable resource of each carrier of an MT during semi-static resource configuration according to an embodiment of this application;
FIG. 14 shows an example of a dynamic resource indication method of DU soft resources in an IAB node according to an embodiment of this application;
FIG. 15 shows an example of indication DCI including indication delay information according to an embodiment of this application;
FIG. 16 shows an example of a dynamic resource indication method of MT resources in an IAB node according to an embodiment of this application; and
FIG. 17 is a schematic diagram of a relay apparatus 1700 according to an embodiment of this application.

### DESCRIPTION OF EMBODIMENTS

The following describes technical solutions of this application with reference to accompanying drawings.

Names of all nodes and messages in this application are merely names that are set for ease of description, and names in an actual network may be different. It should not be understood that names of various nodes and messages are limited in this application. On the contrary, any name having a function the same as or similar to that of a node or a message used in this application is considered as a method or an equivalent replacement of this application, and shall fall within the protection scope of this application. Details are not described below.

A communication system in this application includes but is not limited to: a narrowband internet of things (narrow band-internet of things, NB-IoT) system, a wireless local area network (wireless local access network, WLAN) system, a long term evolution (long term evolution, LTE) system, a fifth generation mobile communication (5th generation mobile networks or 5th generation wireless systems, 5G) system, or a communication system after 5G such as a new radio (new radio, NR) system, a device-to-device (device to device, D2D) communication system.

To better understand the technical solutions provided in this application, the following first describes a network architecture applicable to this application. This application is applicable to a wireless communication system including a relay device. The relay device includes a common fixed relay node such as an IAB node, and also includes a mobile relay node such as a mobile IAB node or a terminal device UE relay. For ease of description, in this application, an example in which the relay device is an IAB node is used to describe the provided technical solutions. It should be understood that, in this application, the IAB node may generally refer to any node or device having a relay function. This does not mean that the solutions in this application are only applicable to an NR scenario. It should be understood that use of the IAB node and use of the relay node or the relay device have a same meaning in this application.

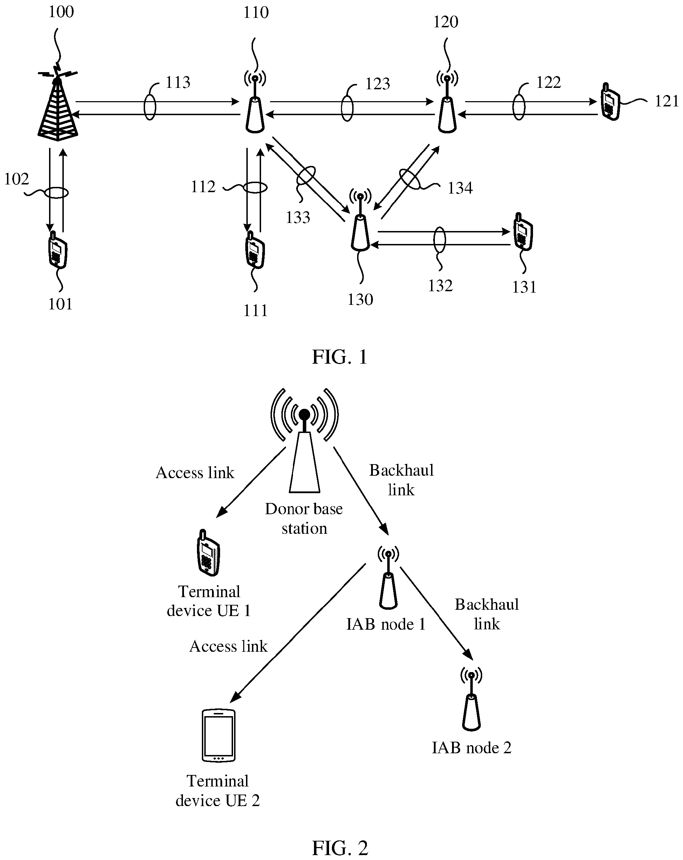

FIG. 1 is a diagram of an architecture of an IAB system applicable to an embodiment of this application. As shown in FIG. 1, one IAB system includes at least one base station 100, one or more terminal devices (terminals) 101 served by the base station 100, one or more relay nodes (for example, IAB nodes) 110, and one or more terminal devices 111 served by the IAB node 110. The base station 100 is generally referred to as a donor base station (donor next generation node B, DgNB), and the IAB node 110 is connected to the base station 100 through a wireless backhaul link 113. The donor base station is also referred to as a donor node, a donor node, or a donor base station in this application.

The base station 100 includes but is not limited to: an evolved node B (evolved node base, eNB), a baseband unit (baseband Unit, BBU), an evolved base station (evolved LTE, eLTE), an NR base station (next generation node B, gNB), a base station after a 5G communication system, and the like.

The terminal device includes but is not limited to any one of a terminal device (user equipment, UE), an access terminal, a subscriber unit, a subscriber station, a mobile station, a remote station, a remote terminal, a mobile device, a terminal, a wireless communication device, a user agent, a station (station, ST) in a wireless local area network (wireless local access network, WLAN), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a mobile station in a 5G network, a terminal device in a future evolved public land mobile network (public land mobile network, PLMN), and the like.

The IAB node is a specific name of a relay node in a 5G NR system, and constitutes no limitation on the solutions of this application. The IAB node may be one of the foregoing base stations or terminal devices having a forwarding function, or may be an independent device form. For example, the IAB node in this application may also be referred to as a relay node (relay node, RN), a transmission reception point (transmission and reception point, TRP), a relay transmission reception point (relaying TRP), or the like.

The IAB system shown in FIG. 1 may further include a plurality of other IAB nodes, for example, an IAB node 120 and an IAB node 130. The IAB node 120 is connected to the IAB node 110 through a wireless backhaul link 123 to access a network. The IAB node 130 is connected to the IAB node 110 through a wireless backhaul link 133 to access the network. The IAB node 120 serves one or more terminal devices 121, and the IAB node 130 serves one or more terminal devices 131. In FIG. 1, both the IAB node 110 and the IAB node 120 are connected to the network through a wireless backhaul link. In this application, each wireless backhaul link is viewed from a perspective of a relay node. For example, the wireless backhaul link 113 is a backhaul link of the IAB node 110, and the wireless backhaul link 123 is a backhaul link of the IAB node 120. As shown in FIG. 1, one IAB node such as the IAB node 120 may be connected to another IAB node 110 through a wireless backhaul link such as 123 to access the network. In addition, the relay node may be connected to the network via a plurality of wireless relay nodes. It should be understood that the IAB node is used in this application only for a description requirement, which does not mean that the solutions in this application are applicable to only an NR scenario. In this application, the IAB node may generally refer to any node or device having a relay function. It should be understood that use of the IAB node and use of the relay node or the relay device have a same meaning in this application.

It should be understood that, one IAB node is connected to one parent node in the IAB system shown in FIG. 1. In a future relay system, one IAB node such as 120 may be served by a plurality of parent nodes to improve reliability of a wireless backhaul link. The IAB node 130 in FIG. 1 may further be connected to the IAB node 120 through a backhaul link 134, that is, both the IAB node 110 and the IAB node 120 are considered as parent nodes of the IAB node 130. Names of the IAB nodes 110, 120, and 130 do not constitute a limitation on a scenario or a network in which the IAB nodes 110, 120, and 130 are deployed, and there may be any other name such as a relay or an RN. The IAB node is used in this application only for a description requirement. In this application, the IAB node may generally refer to any node or device having a relay function.

In the IAB system shown in FIG. 1, the wireless links 102, 112, 122, 132, 113, 123, 133, 134 may be bidirectional links, including uplink and downlink transmission links, in particular, the wireless backhaul links 113, 123, 133, 134 may be used by a parent node to provide a service for a child node. For example, the parent node 100 provides a wireless backhaul service for the child node 110. It should be understood that an uplink and a downlink of a backhaul link may be separated, that is, transmission of an uplink and transmission of a downlink are not via a same node. The downlink transmission means that a parent node, for example, the node 100, transmits information or data to a child node, for example, the node 110, and the uplink transmission means that a child node, for example, the node 110, transmits information or data to a parent node, for example, the node 100. The node is not limited to a network node or a terminal device. For example, in a D2D scenario, the terminal device may act as a relay node to serve another terminal device. In some scenarios, a wireless backhaul link may also be an access link. For example, the backhaul link 123 may also be considered as an access link for the node 110, and the backhaul link 113 is also an access link for the node 100. It should be understood that the parent node may be a base station or a relay node, and the child node may be a relay node or a terminal device having a relay function. For example, in the D2D scenario, the child node may be a terminal device.

FIG. 2 shows a simple example of an IAB system. The IAB system shown in FIG. 2 includes a donor base station, an IAB node 1, an IAB node 2, a terminal device UE 1, and a terminal device UE 2. A link between the donor base station and the IAB node 1, and a link between the IAB node 1 and the IAB node 2 are backhaul links. A link between the terminal device UE 1 and the donor base station and a link between the terminal device UE 2 and the IAB node 1 are access links.

In addition, this application further relates to specific meanings of the following basic terms or concepts.

Access link (access link): a link between a terminal device UE and an IAB node (IAB node) or an IAB donor node (IAB donor). Alternatively, the access link includes a wireless link used when a node communicates with a child node of the node. The access link includes an uplink access link and a downlink access link. The uplink access link is also referred to as uplink transmission of the access link, and the downlink access link is also referred to as downlink transmission of the access link.

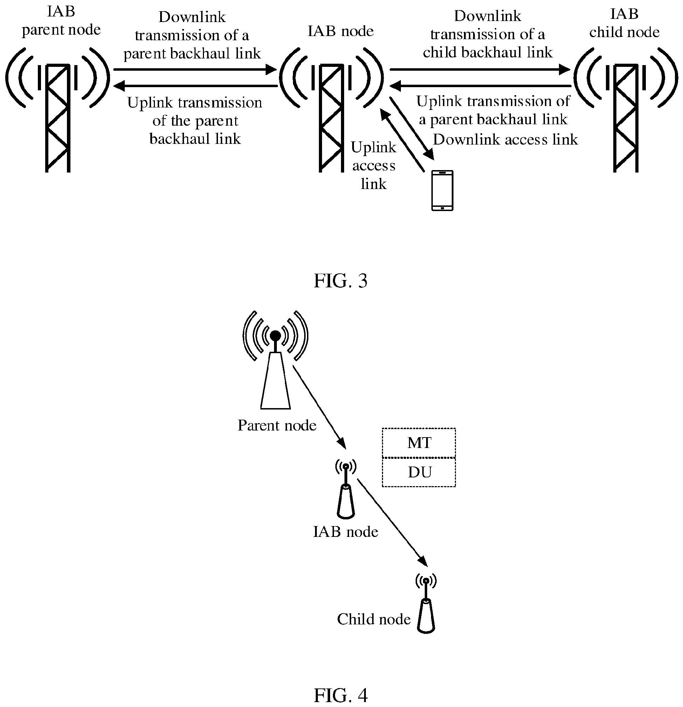

Backhaul link (backhaul link): a link between an IAB node (IAB node) and an IAB child node (IAB child node) or an IAB parent node (IAB parent node). The backhaul link includes a downlink transmission link to the IAB child node or the IAB parent node, and an uplink transmission link to the IAB child node or the IAB parent node. For the IAB node, transmitting data to the IAB parent node or receiving uplink data transmitted by the IAB child node is referred to as uplink transmission of the backhaul link. For the IAB node, receiving data transmitted by the IAB parent node or transmitting data to the IAB child node is referred to as downlink transmission of the backhaul link. To distinguish the terminal device UE from the IAB node, a backhaul link between the IAB node and the IAB parent node is also referred to as a parent backhaul link (parent BH), and a backhaul link between the IAB node and the IAB child node is referred to as a child backhaul link (child BH). In some cases, a child backhaul link and an access link of the IAB node are collectively referred to as access links. That is, a child node is considered as a terminal device of a parent node. FIG. 3 is a schematic diagram of an access link and a backhaul link.

Further, FIG. 4 is a schematic diagram of a structure of an IAB node. As shown in FIG. 4, a termination (mobile-termination, MT) function is defined as a component similar to UE. In an IAB, the MT is referred to as a function (or module) that camps on the IAB node. Because the MT has a function similar to a function of common UE, it may be considered that the IAB node accesses a parent node or a network via the MT. A distributed unit (distributed unit, DU) function is defined as a component similar to a base station. In the IAB system, the DU is referred to as a function (or module) that camps on the IAB node. Because the DU has a function similar to a function or a part of the function of a common base station, it may be considered that the IAB node allows access from a child node or a terminal device via the DU. It should be noted that the termination function is referred to as a terminal unit for short below, and it should be understood that use of the termination function and use of the terminal unit have a same meaning. The terminal unit specifically refers to a function/module that camps on the IAB node, and is used to distinguish from a terminal device UE that may be used as a child node in this application.

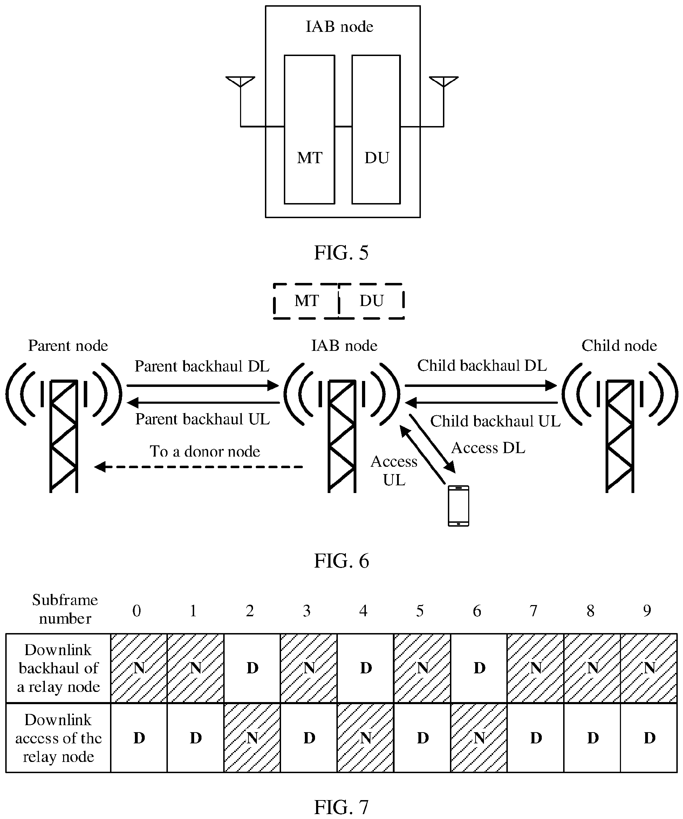

Both the MT and DU modules of the IAB node have complete transceiver units, and there is an interface between the modules. However, it should be noted that the MT and the DU are logical modules. In practice, the MT and the DU may share some submodules, for example, a transceiver antenna and a baseband processing unit as shown in FIG. 5. Further, the MT of the D IAB node may have a plurality of subunits, and the plurality of subunits may be a plurality of carriers, a plurality of panels, a plurality of cells, or the like. The DU of the IAB node may also have a plurality of subunits, and the plurality of subunits may be a plurality of carriers, a plurality of panels, a plurality of cells, or the like. For example, the DU may have a plurality of cells (cells), and the MT may have a plurality of carriers. However, there is a specific association or multiplexing relationship between the MT subunit and the DU subunit.

Further, the IAB node communicates with the parent node via the MT, and the function of the MT is similar to that of the common UE. Therefore, the MT of the IAB node (which may be referred to as an IAB MT for short below) may communicate with the parent node by using carrier aggregation (carrier aggregation, CA). For example, the MT may have a plurality of carriers (component carriers, CCs). In addition, the DU of the IAB node (which may be referred to as an IAB DU for short below) may also have a plurality of submodules. For example, the DU may have a plurality of cells (cells). Two possible cases are used as examples: (1) The DU has panels (panels) or sectors in a plurality of directions, and different panels are different cells. (2) The DU uses carrier aggregation, and different carriers are different cells.

With reference to FIG. 3, a link for communication between the MT and the parent node is referred to as a parent backhaul link (parent BH link), a link for communication between the DU and a child IAB node is referred to as a child backhaul link (child BH link), and a link for communication between the DU and a child UE node is referred to as an access link (access link). As shown in FIG. 6, the parent backhaul link includes a parent backhaul uplink (uplink, UL) and a parent backhaul downlink (downlink, DL), the child backhaul link includes a child backhaul uplink (UL) and a child backhaul downlink (DL), and the access link includes an access uplink (UL) and an access downlink (DL). In some cases, the child backhaul link is also referred to as an access link.

The following describes a method for configuring backhaul resources in an LTE relay system with reference to FIG. 7.

In the LTE relay system, a donor node (or donor node) performs semi-static configuration on backhaul resources for a relay node RN. FIG. 7 shows a specific example of configuring downlink backhaul resources in the LTE relay system. In LTE, the donor node allocates backhaul link resources to the relay node in a unit of subframe (1 ms), and an allocation cycle is one radio frame (10 ms). Specifically, a donor base station specifies some subframes as backhaul link subframes by using radio resource control (radio resource control, RRC) signaling. A quantity and position of backhaul link subframes can be reconfigured, but RRC signaling reconfiguration costs a long time.

Downlink transmission is used as an example. For the relay node in LTE, when a subframe is configured as a backhaul link subframe, the relay node needs to monitor a relay physical downlink control channel (relay physical downlink control channel, R-PDCCH) and/or receive a physical downlink shared channel (physical downlink share channel, PDSCH) in the subframe. Consequently, transmission cannot be performed on an access link. As shown in FIG. 7, subframe 2, subframe 4, and subframe 6 are configured as backhaul link subframes, and subframe 2, subframe 4, and subframe 6 at corresponding positions on the access link are unavailable. In this way, the method for configuring the backhaul resources in LTE is semi-static time division multiplexing (time division multiplexing, TDM) resource allocation.

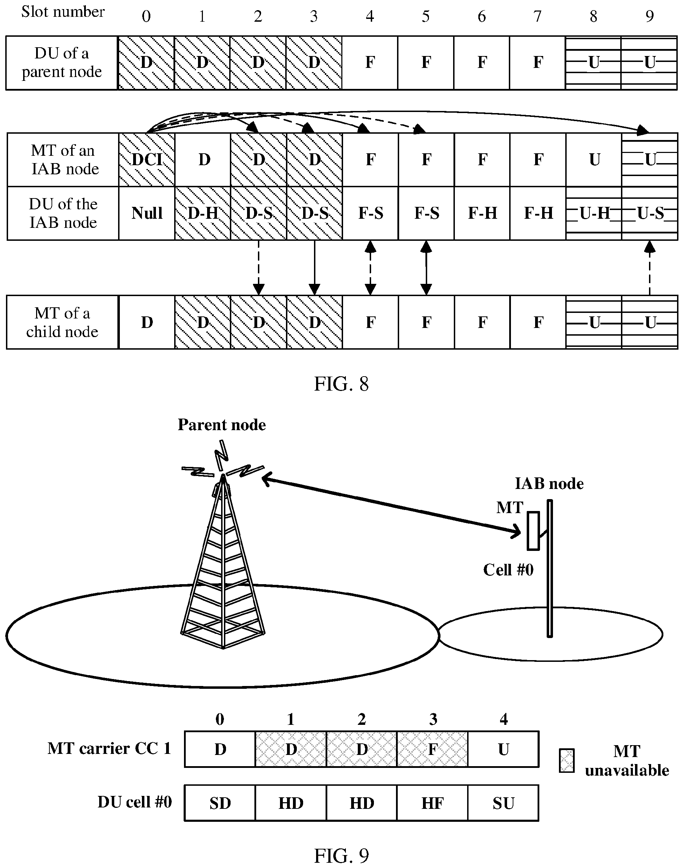

The following describes a resource configuration method in an NR IAB system with reference to FIG. 8.

FIG. 8 is a schematic diagram of an example of resource configuration in the NR IAB system (which may be referred to as NR IAB for short below). MT resources of an IAB node may be configured into three types: uplink (uplink, U), downlink (downlink, D), and flexible (Flexible, F). The three types are also supported by a terminal device in the conventional technology. Therefore, the MT resources may be indicated by using existing signaling. Different from the terminal device, the MT of the IAB node may support more D/U/F sequences. For example, the terminal device supports only a sequence of D--F--U, and the MT may support a sequence of U--F--D, U--D, or the like.

DU resources of the IAB node may be configured into three types: uplink (U), downlink (D), and flexible (F). Further, the three types, uplink, downlink, and flexible DU resources may be further classified into hard (hard, H) resources and soft (soft, S) resources. The DU hard resource indicates a resource that is always available for the DU. The DU soft resource indicates a resource, and whether the resource is available for the DU needs to depend on an indication of a parent node (for example, a donor node). In addition, the DU may further include an unavailable (Null, N) resource.

It can be learned from the foregoing that availability of a part of resources (namely, soft resources) on the DU of the IAB node in NR depends on the indication of the parent node, and the DU resources need to be indicated in a manner of semi-static configuration plus dynamic indication. In addition, whether availability of an MT available resource obtained through semi-static resource configuration is modified to unavailable also depends on an indication of the parent node. This resource allocation manner is greatly different from the resource allocation method in the LTE system.

With reference to FIG. 3 and FIG. 8, the MT of the IAB node is connected to a DU of the parent node, and the DU of the IAB node is connected to an MT of the child node, or the DU of the IAB node is connected to UE. After the semi-static (for example, by using RRC signaling and/or F1-AP interface signaling) resource configuration is performed, the IAB node may obtain resource configurations of the MT resources and the DU resources of the IAB node. For example, the resource configurations may include transmission directions (U/D/F) of the MT resources and the DU resources, a position of an MT available/unavailable resource, attributes (soft/hard) of the DU resources, and a time domain position of a DU unavailable resource (Null). It should be understood that the foregoing related configurations may be obtained by using explicit signaling, or may be obtained in an implicit manner.

Specifically, the MT of the IAB node has three types of resources in total, and the DU of the IAB node has seven types of resources in total. After any type of MT resource and any type of DU resource are combined, possible behavior of the MT of the IAB node and the corresponding DU are shown in the following two tables. Table 1 shows resource configuration statuses of various possible resource type combinations of the MT and the DU in a time division multiplexing (time division multiplexing, TDM) scenario. Table 2 shows resource configuration statuses of various possible resource type combinations of the MT and the DU in a space division multiplexing (spatial division multiplexing, SDM) scenario.

**Table 1**

| DU resource type | MT resource type | | |
|---|---|---|---|
| | D | U | F |
| D-H | DU: Tx | DU: Tx | DU: Tx |
| | MT: NULL | MT: NULL | MT: NULL |
| D-S | When a DU resource is: IA | When a DU resource is: IA | When a DU resource is: |
| | DU: Tx | DU: Tx | IA |
| | MT: NULL | MT: NULL | DU: Tx |
| | When a DU resource is: INA | When a DU resource is: INA | MT: NULL |
| | DU: NULL | DU: NULL | When a DU resource is: |
| | MT: Rx | MT: Tx | INA |
| | | | DU: NULL |
| | | | MT: Tx/Rx |
| U-H | DU: Rx | DU: Rx | DU: Rx |
| | MT: NULL | MT: NULL | MT: NULL |
| U-S | When a DU resource is: IA | When a DU resource is: IA | When a DU resource is: |
| | DU: Rx | DU: Rx | IA |
| | MT: NULL | MT: NULL | DU: Rx |
| | When a DU resource is: INA | When a DU resource is: INA | MT: NULL |
| | DU: NULL | DU: NULL | When a DU resource is: |
| | MT: Rx | MT: Tx | INA |
| | | | DU: NULL |
| | | | MT: Tx/Rx |
| F-H | DU: Tx/Rx | DU: Tx/Rx | DU: Tx/Rx |
| | MT: NULL | MT: NULL | MT: NULL |
| F-S | When a DU resource is: IA | When a DU resource is: IA | When a DU resource is: |
| | DU: Tx/Rx | DU: Tx/Rx | IA |
| | MT: NULL | MT: NULL | DU: Tx/Rx |
| | When a DU resource is: INA | When a DU resource is: INA | MT: NULL |
| | DU: NULL | DU: NULL | When a DU resource is: |
| | MT: Rx | MT: Tx | INA |
| | | | DU: NULL |
| | | | MT: Tx/Rx |
| NULL | DU: NULL | DU: NULL | DU: NULL |
| | MT: Rx | MT: Tx | MT: Tx/Rx |

**Table 2**

| DU resource type | MT resource type | | |
|---|---|---|---|
| | DL | UL | F |
| DL-H | DU: Tx | DU: Tx | DU: Tx |
| | MT: NULL | MT: Tx | MT: Tx |
| DL-S | When a DU resource is: IA | When a DU resource is: IA | When a DU resource is: IA |
| | DU: Tx | DU: Tx | DU: Tx |
| | MT: NULL | MT: Tx | MT: Tx |
| | When a DU resource is: | When a DU resource is: INA | When a DU resource is: INA |
| | INA | DU: NULL | DU: NULL |
| | DU: NULL | MT: Tx | MT: Tx/Rx |
| | MT: Rx | | |

| DU resource | MT resource type | | |
|---|---|---|---|
| type | DL | UL | F |
| UL-H | DU: Rx | DU: Rx | DU: Rx |
| | MT: Rx | MT: NULL | MT: Rx |
| UL-S | When a DU resource is: IA | When a DU resource is: IA | When a DU resource is: IA |
| | DU: Rx | DU: Rx | DU: Rx (only when an IAB-DU learns in advance that an IAB-MT is in an Rx state) |
| | MT: Rx | MT: NULL | |
| | When a DU resource is: | When a DU resource is: INA | |
| | INA | DU: NULL | MT: Rx |
| | DU: NULL | MT: Tx | When a DU resource is: INA |
| | MT: Rx | | DU: NULL |
| | | | MT: Tx/Rx |
| F-H | DU: Tx/Rx | DU: Tx/Rx | DU: Tx/Rx |
| | MT: Rx (only when a parent node learns in advance that the IAB-DU is in the Rx state) | MT: Tx (only when the parent node learns in advance that the IAB-DU is in a Tx state) | MT: Tx (only when a DU of the parent node learns in advance that the IAB-DU is in the Tx state), or Rx (only when the DU of the parent node learns in advance that the IAB-DU is in the Rx state) |
| F-S | When a DU resource is: IA | When a DU resource is: IA | When a DU resource is: IA |
| | DU: Tx/Rx | DU: Tx/Rx | DU: Tx/Rx |
| | MT: Rx (only when the parent node learns in advance that the IAB-DU is in the Rx state) | MT: Tx (only when the parent node learns in advance that the IAB-DU is in the Tx state) When a DU resource is: INA | MT: Tx (only when the DU of the parent node learns in advance that the IAB-DU is in the Tx state), or Rx (only when the DU of the parent node learns in advance that the IAB-DU is in the Rx |
| | When a DU resource is: | DU: NULL | |
| | INA | MT: Tx | |
| | DU: NULL | | |

| DU resource type | MT resource type | | |
|---|---|---|---|
| | DL | UL | F |
| | MT: Rx | | state) |
| | | | When a DU resource is: INA |
| | | | DU: NULL |
| | | | MT: Tx/Rx |
| NA | DU: NULL | DU: NULL | DU: NULL |
| | MT: Rx | MT: Tx | MT: Tx/Rx |

In Table 1 and Table 2, meanings of the identifiers are as follows:
"MT: Tx": The MT should perform transmission after being scheduled.
"DU: Tx": The DU may perform transmission.
"MT: Rx": The MT is capable of perform receiving (if there is a signal that needs to be received).
"DU: Rx": The DU may schedule uplink transmission of the child node.
"MT: Tx/Rx": The MT should perform transmission or receiving after being scheduled, and the transmission and receiving do not occur simultaneously.
"DU: Tx/Rx": The DU may perform transmission or receiving transmission from the child node, and the transmission and receiving do not occur simultaneously.
"IA": The DU resource is explicitly or implicitly indicated as available.
"INA": The DU resource is explicitly or implicitly indicated as unavailable.
"MT: NULL": The MT does not perform sending and does not need to have a receive capability.
"DU: NULL": The DU does not perform sending and does not receive transmission from the child node.

The IAB node and the parent node of the IAB node should determine or derive the availability of the MT resources based on the DU resource configurations. A derivation principle is that transmission of the MT does not affect use of the DU hard resources by the DU. As an example, it can be learned with reference to FIG. 8 and the foregoing Table 1 that for the IAB node, MT resources (for example, MT resources corresponding to a slot 1, a slot 6, a slot 7, and a slot 8) corresponding to DU hard resources of the IAB node (for example, DU resources corresponding to the slot 1, the slot 6, the slot 7, and the slot 8) are unavailable in a TDM case.

When the DU has a plurality of cells, different cells of the DU may have different resource attributes (hard/soft). For example, it is assumed that the DU has two cells: a cell 0 and a cell 1, where the cell 0 shares an antenna panel with the MT, or is in a same direction as the antenna panel of the MT. Five time domain resources (slots) are considered. As shown in FIG. 9, a slot 0 is an MT downlink resource and a downlink soft resource of the two cells, a slot 1 to a slot 3 are unavailable for the MT, the slot 1 and a slot 2 are downlink hard resources of the two cells, the slot 3 is a flexible uplink/downlink hard resource of the two cells, and a slot 4 is an MT uplink resource, a soft resource of the cell 0, and a hard resource of the cell 1. It should be noted that, in FIG. 9, a letter "U" represents an uplink resource type, a letter "D" represents a downlink resource type, a letter "F" represents a flexible resource type, a letter "S" represents a soft resource attribute, and a letter "H" represents a hard resource attribute. The two cells of the DU may have different H/S types of resources in the slot 4 for a reason. The reason is: A transmission direction of the cell 1 in this slot is opposite to a transmission direction of the MT, and simultaneous transmission (sending) does not violate a half-duplex constraint (that is, when one of the MT and the DU performs receiving, the other cannot perform sending). In addition, the MT is in a direction opposite to a cell #1 panel, and influence on each other is little.

The NR IAB uses a two-level resource indication to dynamically coordinate resources between an access link and a backhaul link. Specifically, the two-level resource indication means that the parent node configures resources for the DU of the IAB node in an explicit or implicit manner, and a resource attribute includes at least two types: soft and hard. The hard resource indicates a resource that is always available for the DU of the IAB node. Availability of the soft resource depends on the indication of the parent node. In addition, the parent node also configures resources for the MT of the IAB node in an explicit or implicit manner. Whether the availability of the MT available resources is modified depends on the instruction of the parent node.

After the semi-static resource configuration is performed, the IAB node may obtain the resource configurations of the MT resources and the DU resources of the IAB node. For example, the resource configurations may include the transmission directions (U/D/F) of the MT resources and the DU resources, the position of the MT available/unavailable resource, the attributes (soft/hard) of the DU resources, and the time domain position of the DU unavailable resource (Null). Generally, the resource configuration of the MT is transmitted by using air interface signaling such as RRC, and the resource configuration of the DU is transmitted by using an interface message such as F1-AP. After the semi-static configuration is completed, the parent node may indicate, to the IAB node, availability of the soft resource of the IAB node by using dynamic signaling, for example, downlink control information (downlink control information, DCI). In this application, the DCI is referred to as indication DCI. The indication DCI may be based on a dedicated DCI format, or may be an enhancement to or reuse of existing DCI.

Dynamic indication can be classified into explicit indication and implicit indication.

Implicit indication: The parent node indicates whether the MT resources of the IAB node are released (namely, unavailable), and the IAB node derives the availability of the DU soft resource of the IAB node based on the indication on the MT resources by the parent node.

Explicit indication: The parent node directly indicates the availability of the DU soft resource of the IAB node.

The indication DCI explicitly or implicitly indicates the availability of the soft resource, and may further simultaneously indicate other content such as a transmission direction of a DU flexible resource.

For a case in which an MT has a plurality of carriers and a DU has a plurality of cells in an IAB system, embodiments of this application provide a resource dynamic indication method and an apparatus, to dynamically indicate a resource configuration solution when the MT has the plurality of carriers and the DU has a plurality of cells. The method and the apparatus are based on a same technical idea. The method and the apparatus have similar principles for resolving problems. Therefore, for implementations of the apparatus and the method, refer to each other. Details of repeated parts are not described again.

The resource dynamic indication method provided in the embodiments of this application may be applied to the communication system shown in FIG. 1. It should be understood that FIG. 1 shows merely an example for description, and a quantity and a type of terminal devices, network devices, and relay nodes included in the communication system are not specifically limited.

It should be understood that, in the embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one (piece) of the following" or a similar expression thereof means any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural.

In addition, it should be understood that, in the descriptions of this application, the terms such as "first", "second", and "third" are merely used for differentiation and description, but cannot be understood as an indication or implication of relative importance or an indication or implication of an order.

The following specifically describes a method for dynamically indicating MT resources and DU resources of an IAB node provided in embodiments of this application with reference to accompanying drawings.

For ease of description, in the following embodiments, a first node is an IAB node, a second node is a parent node of the IAB node, and a third node is a child node of the IAB node. First resources are MT resources of the IAB node, and second resources are DU resources of the IAB node. It should be understood that the IAB node in this application is used only for a description requirement, which does not mean that the resource dynamic indication method in this application is applicable to only an NR scenario. In this application, the IAB node may generally refer to any node or device having a relay function. It should be understood that use of the IAB node and use of a relay node or a relay device have a same meaning in this application.

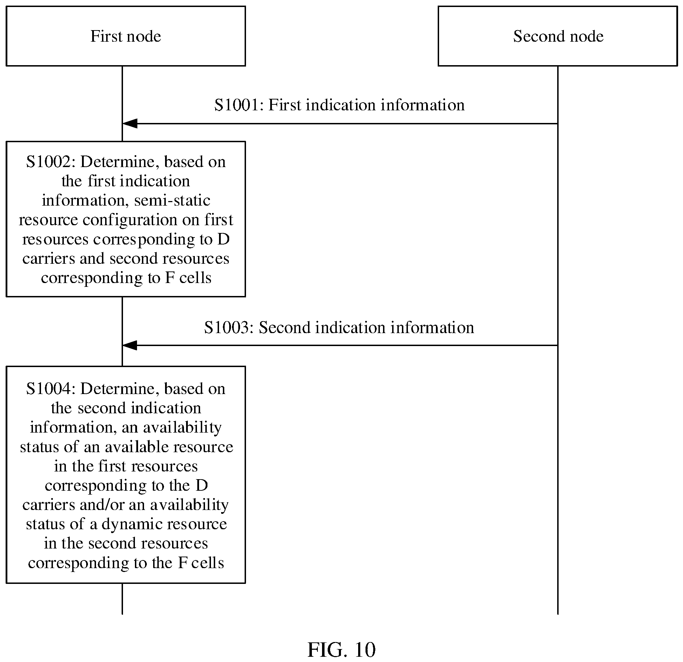

FIG. 10 is a flowchart of the resource dynamic indication method according to an embodiment of this application, and the method includes:

S1001: A second node or a donor node sends first indication information to a first node, where the first indication information is used to indicate semi-static resource configuration on first resources corresponding to D carriers in the first node and second resources corresponding to F cells in the first node.

Specifically, the first node may be an IAB node, and the second node is a parent node of the IAB node. In addition to the first node and the second node, this embodiment of this application may further include a third node, and the third node is a child node of the IAB node. The first node may be a relay device, where the relay device includes a common fixed relay node such as the IAB node, and also includes a mobile relay node such as a mobile IAB node or a UE relay. The second node may be a common network device such as a base station, or may be a relay device. The third node may be a relay device, or may be a terminal device.

Further, the first resources are transmission resources for communication between the first node and the second node, in other words, MT resources of the IAB node. The second resources are transmission resources for communication between the first node and the third node, in other words, DU resources of the IAB node.

Generally, an MT of the IAB node may have a plurality of subunits, and the plurality of subunits may be a plurality of carriers, a plurality of panels, a plurality of cells, or the like. A DU of the IAB node may also have a plurality of subunits, and the plurality of subunits may be a plurality of carriers, a plurality of panels, a plurality of cells, or the like. In this embodiment of this application, an example in which the MT of the IAB node has (or is configured with) the plurality of carriers (CCs) and the DU has (or is configured with) the plurality of cells (cells) is used to describe the resource dynamic indication method provided in this application. It is assumed that the MT of the IAB node has D carriers, where D ≥ 1; and the DU of the IAB node has F cells, where F ≥ 1. It should be understood that this embodiment of this application is described only by using a carrier or a cell as an example, and are not limited to using a carrier or a cell as a unit. In a specific implementation, another submodule or subunit may be used as a unit, for example, a sector or an antenna panel. For example, when the sector is used as a unit, the DU of the IAB node may have K sectors, where K ≥ 2.

It should be understood that, when the UE or the MT uses carrier aggregation, serving cells (serving cells) are usually used to identify or describe component carriers in a communication protocol such as LTE and NR, and different serving cells have different serving cell IDs. In this application, to be distinguished from the cell of the DU, the serving cells of the MT are directly described by using the component carriers, that is, carriers of the MT corresponds to the serving cells of the MT in the protocol in this application.

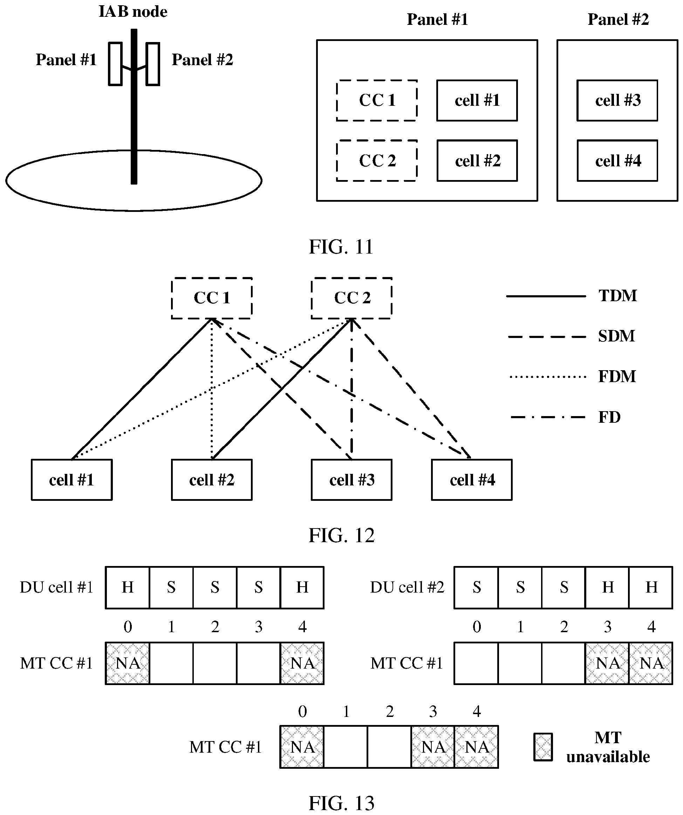

FIG. 11 shows an example case in which the MT of the IAB node has two carriers: a CC 1 and a CC 2, and the DU of the IAB node has four cells: a cell 1, a cell 2, a cell 3, and a cell 4. In other words, D = 2, and F = 4. The IAB node in the example has two (two groups of) antenna panels in different directions: panel 1 and panel 2.

As shown in FIG. 11, the DU of the IAB node may communicate with the child node on each (group of) antenna panel (panel) via two cells that use different carriers (denoted as a CC 3 and a CC 4), that is, the DU of the IAB node runs two cells on each antenna panel. For example, the cell 1 and the cell 2 are run on the antenna panel 1, and the cell 3 and the cell 4 are run on the antenna panel 2. Therefore, the DU in FIG. 11 has four cells: a cell 1, a cell 2, a cell 3, and a cell 4. On the other hand, the MT of the IAB node uses one (group of) antenna panel 1 to communicate with the parent node through two carriers (carrier aggregation) a CC 1 and a CC 2. The two carriers CC 1 and CC 2 of the MT are respectively the same as the two carriers CC 3 and CC 4 of the DU. In other words, the two carriers CC 1 and CC 2 of the MT respectively overlap the two carriers CC 3 and CC 4 of the DU. Specifically, a frequency band of the carrier CC 1 used by the MT overlaps a frequency band of the cell 1 running on the panel 1 by the DU and a frequency band of the cell 3 running on the panel 2 by the DU. A frequency band of the carrier CC 2 used by the MT overlaps a frequency band of the cell 2 running on panel 1 by the DU and a frequency band of the cell 4 running on panel 2 by the DU. It should be understood that frequency band overlap may mean that entire frequency bands completely overlap, or may mean that a part of the frequency bands overlap.

Further, there may be different resource multiplexing or association relationships between the plurality of (for example, D) carriers of the MT and the plurality of (for example, F) cells of the DU during transmission. Still, an example in which the MT has two carriers: a CC 1 and a CC 2, and the DU has four cells: a cell 1, a cell 2, a cell 3, and a cell 4 in FIG. 11 is used. A possible resource multiplexing or association relationship between each carrier of the MT and each cell of the DU is shown in FIG. 12, which includes but is not limited to:

Time division multiplexing (TDM): The carrier of the MT and the cell of the DU cannot perform transmission simultaneously. For example, the carrier CC 1 of the MT and the cell 1 of the DU use an overlap carrier frequency and are located on the same antenna panel. Therefore, a resource multiplexing or association relationship between the CC 1 and the cell 1 is TDM. To be specific, the cell 1 cannot perform any form of transmission during transmission of the carrier CC 1, and the carrier CC 1 cannot perform any form of transmission during transmission of the cell 1. Similarly, a multiplexing relationship between the carrier CC 2 and the cell 2 is also TDM.

(Half-duplex) frequency division multiplexing (FDM): The carrier of the MT and the cell of the DU may perform receiving simultaneously or perform sending simultaneously, but the sending and receiving do not occur simultaneously. For example, the carrier CC 1 and the cell 2 use a same antenna panel but have different carrier frequency bands. Therefore, the carrier CC 1 and the cell 2 may perform receiving simultaneously or perform sending simultaneously, that is, perform (half-duplex) FDM.

(Half-duplex) space division multiplexing (space division multiplexing, SDM): The carrier of the MT and the cell of the DU may perform receiving simultaneously or perform sending simultaneously, but the sending and receiving do not occur simultaneously. For example, the carrier CC 1 and the cell 3 have a same carrier frequency band but use different antenna panels. Therefore, the carrier CC 1 and the cell 3 may perform receiving simultaneously or perform sending simultaneously, that is, perform (half-duplex) SDM.

Full duplex (full duplex, FD): Receiving and sending of the carrier of the MT and that of the cell of the DU do not affect each other. For example, the carrier CC 1 and the cell 4 use carriers on different frequency bands and use different antenna panels. Therefore, there is sufficient isolation between the carrier CC 1 and the cell 4, and the carrier CC 1 and the cell 4 may perform receiving simultaneously and perform sending simultaneously without affecting each other. The full-duplex resource multiplexing or association relationship between the carrier of the MT and the cell of the DU may be defined as no resource multiplexing or association relationship between the carrier of the MT and the cell of the DU. The full duplex may be intra-frequency full duplex or inter-frequency full duplex. The inter-frequency full duplex may also be referred to as full-duplex FDM.

In addition, the following resource multiplexing or association relationship may alternatively exist between each carrier of the MT and each cell of the DU:

Dynamic (adaptive) SDM/FDM: The cell of the DU determines configuration or a solution of half-duplex simultaneous sending/simultaneous receiving based on an MT transmission status. For example, when the MT performs downlink transmission, the DU of the IAB node can select only some terminal devices to perform uplink sending. When the MT does not perform transmission, the DU of the IAB node may select more terminal devices to perform uplink sending. An example in which the MT and the DU perform receiving simultaneously is used. Different terminal devices may cause different levels of interference to the receiving of the MT. When the MT performs transmission, the DU should select a terminal device that has no or controllable impact on the transmission of the MT to perform uplink transmission.

Dynamic (adaptive) full duplex: The cell of the DU determines configuration or a solution of full-duplex sending or receiving based on an MT transmission status. For example, when the MT performs downlink transmission, the DU of the IAB node can select only some terminal devices to perform downlink transmission. When the MT does not perform transmission, the DU may select more terminal devices to perform downlink transmission.

In a possible implementation, default resource multiplexing or association relationships may exist between carriers of the MT and cells of the DU. For example, the default resource multiplexing or association relationship between each carrier of the MT and each cell of the DU may be time division multiplexing TDM. In another possible implementation, the IAB node may modify default resource multiplexing or association relationships between all or some of the carriers of the MT and the cells of the DU by reporting information to the parent node/donor node. For example, the IAB node reports that resource multiplexing or association relationships between some carriers of the MT and the cells of the DU are full duplex, and resource multiplexing or association relationships between the other carriers of the MT and the cells of the DU are still default time division multiplexing TDM.

Currently, a resource configuration manner of NR is semi-static resource configuration plus dynamic resource indication. Before performing dynamic resource indication, the second node sends the first indication information to the first node, to indicate semi-static resource configuration on the MT resources and the DU resources of the first node.

S1002: The first node determines, based on the first indication information, the semi-static resource configuration on the first resources corresponding to the D carriers and the second resources corresponding to the F cells.

Specifically, that the first node receives the first indication information, and determines the semi-static resource configuration on the MT resources and the DU resources based on the first indication information includes:

MT resource configuration: Semi-static configuration on the MT resources is similar to that of the terminal device. The donor node and/or the parent node of the IAB node may configure three resource types D/U/F of the MT resources by using broadcast signaling and unicast RRC signaling carrier by carrier. It should be understood that the parent node of the IAB node may further modify the resource type of the MT of the IAB node by using downlink control information (DCI).

DU resource configuration: The DU may be configured with D/U/F resource types by the donor node or parent node of the IAB node. Then, the donor node or the parent node of the IAB node may further indicate a hard/soft attribute (attribute) of the DU resource and a time domain position of an unavailable resource (NA). Generally, the donor node or the parent node of the IAB node performs resource configuration for the DU by using an interface message.

In a possible implementation, the donor node or the parent node of the IAB node indicates both the hard/soft attribute of the DU resource and the time domain location of the unavailable resource (NA) by using interface signaling such as F1-AP, that is, the DU unavailable resource is considered as an attribute of the DU resource. In another possible implementation, the donor node or the parent node of the IAB node separately indicates the hard/soft attribute of the resource and the time domain location of the unavailable resource (NA) by using independent signaling.

After the semi-static resource configuration is performed, the IAB node obtains the three resource types D/U/F of the MT resources, the hard and soft attributes of the DU resources, and the time domain location of the unavailable resource (NA). The IAB node and the parent node of the IAB node need to derive an MT available/unavailable resource based on the resource multiplexing or association relationship between each carrier of the MT and each cell of the DU, to ensure that transmission between the parent node of the IAB node and the MT of the IAB node does not affect use of the hard resource of the DU of the IAB node.

Specifically, a method for deriving the available/unavailable resource of each carrier of the MT of the IAB node is as follows.

When one carrier of the MT is associated with one cell of the DU, if a resource multiplexing relationship between the carrier of the MT and the cell of the DU is time division multiplexing TDM, an MT resource whose time domain overlaps with that of a DU hard resource is an unavailable resource; and if the multiplexing relationship between the carrier of the MT and the cell of the DU is half-duplex frequency division multiplexing (frequency division multiplexing, FDM) or half-duplex space division multiplexing (space division multiplexing, SDM), an MT resource whose time domain overlaps with that of the DU hard resource and whose transmission direction is the same as that of the DU hard resource is an unavailable resource. For example, as shown in FIG. 9, the MT includes one carrier CC 1, the DU includes one cell 0, and a resource multiplexing relationship between the carrier of the MT and the cell of the DU is time division multiplexing TDM. In this case, an MT resource whose time domain overlaps with that of a DU hard resource is an unavailable resource.

It should be noted that an MT available resource is a resource that does not affect transmission of the DU hard resource. Due to a timing offset between the MT and the DU and a switching interval between the MT resource and the DU resource, some MT resources that do not overlap with the DU hard resource may also affect the transmission of the DU hard resource, and therefore should also be considered as MT unavailable resources.

When one carrier of the MT is associated with a plurality of cells of the DU, derivation of available/unavailable resources of the carrier of the MT needs to depend on a resource configuration of the plurality of cells of the DU associated with the carrier of the MT. For example, the available/unavailable resources of the carrier of the MT may be derived by using both resource types and resource attributes of the plurality of cells of the DU. A derivation principle is that transmission between the carrier of the MT of the IAB node and the parent node of the IAB node does not affect use of hard resources of any cell of the DU of the IAB node. Specifically, available resources of the carrier of the MT are an intersection set of available resources of the carrier of the MT derived by each cell of the DU associated with the carrier of the MT. In other words, unavailable resources of the carrier of the MT are a union set of unavailable resources of the carrier of the MT derived by each cell of the DU associated with the carrier of the MT.

It should be noted that, in an application scenario in which the MT has a plurality of carriers and the DU has a plurality of cells, during the semi-static resource configuration, available/unavailable resources of each carrier of the MT may be derived carrier by carrier according to the foregoing method. For example, as shown in FIG. 13, the MT includes two carriers: a CC 1 and a CC 2, and the DU includes four cells: a cell 1, a cell 2, a cell 3, and a cell 4. The carrier CC 1 of the MT is associated with the cell 1 and the cell 2 of the DU. Based on the resource configuration of the cell 1 of the DU, available resources of the carrier CC 1 of the MT are derived to be a slot 1, a slot 2, and a slot 3. Based on the resource configuration of the cell 2 of the DU, available resources of the carrier CC 1 of the MT are derived to be a slot 0, the slot 1, and the slot 2. It can be learned from an intersection of the two available resource sets that available resources of the carrier CC 1 of the MT are the slot 1 and the slot 2. In other words, unavailable resources of the carrier of the MT are the slot 0, the slot 3, and a slot 4.

It should be understood that the foregoing derivation process may have a process explicitly defined in a protocol, or may be reserved to be implemented by the IAB node and the parent node of the IAB node.

It should be noted that, the MT available resource obtained through the semi-static resource configuration is a resource that may possibly be used for transmission on the backhaul link. In an actual process, whether the available resource is used for transmission on the backhaul link depends on an indication of the parent node.

S1003: The second node sends second indication information to the first node, where the second indication information is used to indicate an availability status of an available resource in the first resources corresponding to the D carriers in the first node and/or an availability status of a dynamic resource in the second resources corresponding to the F cells in the first node.

A resource configuration manner of the NR IAB is semi-static resource configuration plus dynamic resource indication. After a semi-static configuration of the MT resources and the DU resources of the IAB node is obtained through the semi-static resource configuration, the parent node of the IAB node may explicitly or implicitly indicate availability of a DU soft resource of the IAB node by using dynamic signaling, or whether an MT available resource of the IAB node may be released. In this application, the parent node of the IAB node releases the MT available resource, meaning that the parent node indicates that the available resource is not to be used on the backhaul link. It should be noted that, the MT available resource obtained through the semi-static resource configuration is a resource that may possibly be used on the backhaul link. However, whether the available resource is actually used on the backhaul link for transmission, that is, whether the availability status of the MT available resource is modified (rewritten, re-indicated, or overwritten) depends on an indication of the parent node.

Specifically, the availability status of the available resource in the first resources may mean that the parent node of the IAB node explicitly or implicitly indicates whether the MT available resource of the IAB node may be released, that is, whether the availability status of the MT available resource obtained through the semi-static resource configuration may be modified (rewritten, re-indicated, or overwritten) by the parent node. The parent node of the IAB node modifies the availability of the available resource in the first resources corresponding to the D carriers. Generally, only an original available resource may be modified to unavailable, but an original unavailable resource cannot be modified to available. Whether the availability status of the MT available resource may be modified by the parent node depends on an indication of the second indication information of the parent node. The availability status of the dynamic resource in the second resources may refer to availability of a DU soft resource of the IAB node, that is, the parent node of the IAB node explicitly or implicitly indicates the availability of the DU soft resource of the IAB node. When the parent node indicates that the DU soft resource is unavailable, the IAB node does not use the corresponding resource to communicate with the child IAB node or the UE.

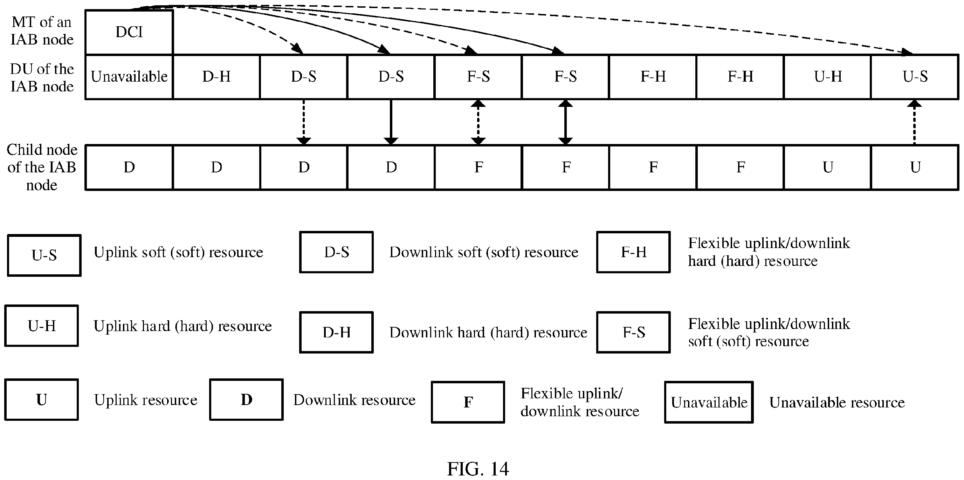

Further, the foregoing dynamic resource indication method is described by using an example in which the parent node of the IAB node indicates the DU soft resource of the IAB node. As shown in FIG. 14, if the second indication information indicates that a dynamic resource in a second resource of a cell in the F cells of the DU of the IAB node is available (solid line in the figure), the first node can communicate with the third node by using the corresponding resource. If the second indication information indicates that a dynamic resource in a second resource of a cell in the F cells of the DU is unavailable (dashed line in the figure), the first node cannot communicate with the third node by using the corresponding resource.

In this embodiment of this application, the second indication information may be sent by using dynamic signaling such as downlink control information (downlink control information, DCI).

For ease of description, the second indication information that is used for dynamic resource indication and that is sent by the second node is referred to as indication DCI below. The indication DCI may use a dedicated DCI format, or may be obtained by adding or modifying a field in an existing DCI format.

The donor node or the parent node of the IAB node may configure related information of the indication DCI for the IAB node by using radio resource control RRC signaling. The related information of the indication DCI may include at least one of the following:
(1) Control resource set (control resource set, CORESET) information: The control resource set information is the same as or similar to a configuration of an existing control resource set CORESET.
(2) Search space set information: The search space set information includes configuration information of search space of the indication DCI, is the same as or similar to a configuration of a common search space set, and includes a CORESET associated with the search space, time domain information (a cycle, an offset, duration, a start symbol of the search space in a slot, and the like) of the search space, physical downlink control channel (physical downlink control channel, PDCCH) candidate set (candidate) information, DCI format information, an aggregation level, and the like.
(3) Indication delay information: The indication delay is a time difference between time at which the MT of the IAB node receives the physical downlink control channel PDCCH and an indication start position of the corresponding DCI. The delay may also be indicated by the DCI.
(4) Indication range information: The indication range information indicates a time domain range of application of the indication DCI.

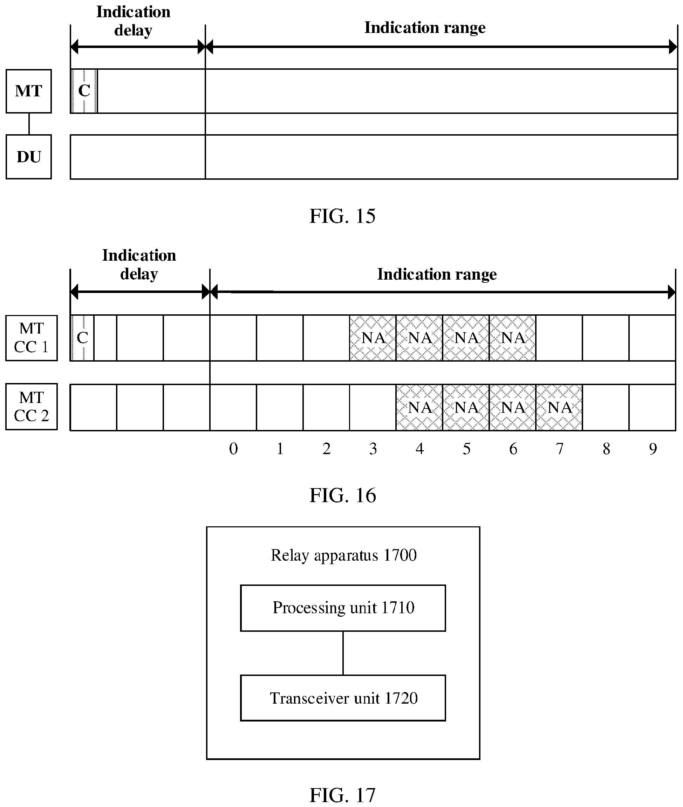

For example, FIG. 15 shows an example of indication DCI including the indication delay information. The indication delay may be time between a start symbol of the indication DCI (a corresponding physical downlink control channel PDCCH or CORESET) and the start position of the indication range, or may be time between an end symbol of the indication DCI (the corresponding PDCCH or CORESET) and the start position of the indication range.

S1004: The first node determines, based on the second indication information, the availability status of the available resource in the first resources corresponding to the D carriers and/or the availability status of the dynamic resource in the second resources corresponding to the F cells.

Specifically, that the first node receives the second indication information, and determines dynamic resource configuration on the MT resources and the DU resources based on the second indication information includes:
(1) determining whether an availability status of an available resource of each carrier in the D carriers of the MT of the IAB node is modified by the parent node of the IAB node; and
(2) determining an availability status of a soft resource of each cell in the F cells of the DU of the IAB node, that is, whether the DU soft resource is used on a backhaul link or an access link.

The foregoing embodiment provides a detailed design in which the parent node of the IAB node explicitly indicates the availability status of the MT available resource of the IAB node and the availability status of the DU soft resource when the MT includes the plurality of carriers and the DU includes the plurality of cells. The following describes in detail a solution in which the parent node of the IAB node explicitly indicates only the availability status of the MT available resource of the IAB node, and the IAB node may implicitly determine the availability status of the DU soft resource of the IAB node based on the indication. In addition, the following describes in detail a design of a solution in which the parent node of the IAB node explicitly indicates only the availability status of the DU soft resource, and the IAB node may implicitly determine the availability status of the MT available resource of the IAB node based on the indication.

In a possible implementation, when the MT includes the plurality of carriers and the DU includes the plurality of cells, the parent node of the IAB node may explicitly indicate only the availability status of the MT available resource of the IAB node, and the IAB node may implicitly determine the availability status of the DU soft resource of the IAB node based on the indication. That is, the parent node of the IAB node indicates whether the availability of the available resource determined by the MT of the IAB node through the semi-static configuration is modified, and the IAB node derives the availability status of the DU soft resource of the IAB node based on the indication (referred to as an MT indication for short below) of the parent node on the availability of the MT available resource. In other words, for one cell of the DU, based on dynamic resource indication results of a plurality of carriers of the MT associated with the cell of the DU, an availability status of a soft resource of the cell of the DU should be determined, that is, whether the IAB node uses the DU soft resource obtained through the semi-static resource configuration to communicate with a child IAB node or UE. When the availability status of the DU soft resource is determined, a resource multiplexing or association relationship between each carrier of the MT and each cell of the DU needs to be considered.

It should be noted that the MT indication may be performed carrier by carrier. Specifically, the parent node of the IAB node may indicate, by using different DCI fields, availability of time domain resources of different carriers of the MT (whether the availability status of the available resource is modified to unavailable). Alternatively, the parent node of the IAB node may separately indicate the availability of the time domain resources of the different carriers of the MT (whether the availability status of the available resource is modified to unavailable). After receiving the MT indication, the MT of the IAB node may determine time domain and frequency domain resources (carrier level) used by the parent node to communicate the MT.

Refer to FIG. 16. Ten MT resources (assumed to be a slot 0 to a slot 9) in an indication range are considered by using an example in which the MT has two carriers: a CC 1 and a CC 2. It may be learned that, through the semi-static resource configuration, MT available resources on the carrier CC 1 are slots {0, 1, 2, 7, 8, 9}, and available resources on the carrier CC 2 are slots {0, 1, 2, 3, 8, 9}. Therefore, the parent node may indicate, carrier by carrier, whether an availability status of the MT available slot is modified.

In a possible implementation, a physical downlink channel PDCCH carrying the indication DCI is located on one carrier of the MT. In a possible implementation, the MT may also receive the indication DCI by using different carriers.

For an MT unavailable resource derived through the semi-static resource configuration, the parent node does not indicate the resource, the parent node indicates to release the resource, or the IAB node ignores the indication of the parent node.

In a possible implementation, the parent node may alternatively indicate the availability status of the MT available resource by grouping the carriers. Specifically, the parent node simultaneously indicates availability of available resources of a carrier group (a plurality of carriers) of the MT. When the parent node indicates that a specific time domain resource of the MT is available/unavailable, time domain resources corresponding to the plurality of carriers in the carrier group are all indicated as available/unavailable. FIG. 16 is still used as an example. For slots {0, 1, 2, 8, 9}, the parent node indicates whether the availability statuses of the available resources of both the carrier CC 1 and the carrier CC 2 may be modified. In other words, whether the availability status of the available resource of the carrier CC 1 and the availability status of the available resource of the carrier CC 2 may be modified can be indicated only simultaneously. A slot 3 is an unavailable resource through the semi-static configuration on the carrier CC 1. In this case, the indication of the parent node is applicable to only the carrier CC 2. Similarly, for the slot 7, the indication of the parent node is applicable to only the carrier CC 1. In other words, the IAB node may ignore the indication of the parent node for the MT unavailable resource derived through the semi-static resource configuration. Carrier group-based indication can reduce overheads of the indication DCI, but lacks resource multiplexing flexibility of the MT resources and the DU resources of the IAB node.

It should be noted that there may be an indication range of the indication the DCI, and a resource indicated by the parent node of the IAB node should fall within the indication range. Further, the IAB node needs to determine a specific resource set indicated by the indication DCI within the indication range.

In a possible implementation, indication resources of the parent node (or MT to-be-indicated resources of the IAB node) are all MT available resources within the indication range, and the MT available resources are obtained through the semi-static resource configuration. A specific manner of obtaining the MT available resources is the same as the method provided in step S1001 in the embodiment shown in FIG. 10.

In a possible implementation, the indication resources of the parent node (or the MT to-be-indicated resources of the IAB node) may be determined by a specific cell set of the DU. For example, it is assumed that a specific cell of the DU in the specific cell set of the DU has a TDM resource multiplexing relationship with a carrier of the MT. In this case, the MT to-be-indicated resources include an MT resource corresponding to a soft resource of the specific cell of the DU, or include MT resources corresponding to the soft resource and an unavailable (NA) resource of the specific cell of the DU. When the specific cell set of the DU includes a plurality of specific cells of the DU, the indication resources of the parent node may include an intersection set or a union set of MT to-be-indicated resources determined based on the plurality of specific cells of the DU. In the embodiment shown in FIG. 10, if the MT in the IAB node has the D carriers, the DU has the F cells, and there are resource multiplexing or association relationships between all D carriers and all F cells, an MT to-be-indicated resource set corresponding to the D carriers is determined based on the DU resources corresponding to the F cells associated with the D carriers. Different from the embodiment shown in FIG. 10, in this implementation, the MT to-be-indicated resource set associated with specific G cells may be determined based on DU resources corresponding to the specific G cells in the F cells, where G < K.

In a possible implementation, the indication resources of the parent node (or the MT to-be-indicated resources of the IAB node) are directly indicated by the parent node or the donor node. This implementation is generally applied to a multi-connection scenario.

In a possible implementation, the indication resources of the parent node (or the MT to-be-indicated resources of the IAB node) are all MT resources of the IAB node within the indication range.

Further, in some cases, an MT resource that is indicated by the indication DCI sent by the parent node is an MT unavailable resource (determined through the semi-static configuration) of the IAB node. In this case, the MT may ignore a corresponding field of the indication DCI, or the MT expects that the indication DCI always indicates that the unavailable resource is unavailable. For example, the parent node indicates an availability status of one MT slot, and the MT slot may include several unavailable symbols. In this case, even if the parent node indicates the slot as available, the unavailable symbols in the original slot are still unavailable.

In addition, an indication granularity of the indication DCI is further described in detail in this application. Specifically, the indication resource granularity of the indication DCI may be a slot level, a symbol level, or a resource type level.
(1) Slot level indication: The parent node of the IAB node indicates whether the MT resources are available slot by slot (or whether the availability status of the MT available resource is modified). In a simplest case, each MT slot requires only one bit for indication. It should be understood that the MT slot herein refers to an MT slot in an available MT resource.
(2) Symbol level indication: The parent node of the IAB node may modify some symbols in a slot to unavailable. For example, by using a start and length indicator value (start and length indicator value, SLIV), the parent node of the IAB node may indicate a segment of consecutive symbols in a slot as available/unavailable.
(3) Resource type level indication: The resource type level indication may be considered as a special symbol level indication, to be specific, indication signaling may separately indicate availability of symbols of each or more resource types (D/U/F) in a slot. For the MT indication, the resource type level indication may be divided into two sub-methods: (a) MT resource type-based indication, to be specific, symbols with different resource types in one MT slot may be independently indicated as unavailable; (b) DU resource type-based indication, to be specific, MT symbols corresponding to symbols with different resource types in one DU slot may be independently indicated as unavailable.

It should be further noted that different time domain resources (for example, different slots) may be bounded for indication, to be specific, the parent node of the IAB node may indicate a same resource availability status for a plurality of bound time domain resources.

In addition, in a possible implementation, releasing one MT resource by the IAB node indicates that a corresponding DU resource is available, and the corresponding DU resource indicates a DU resource having a same identifier (for example, a same index) as the MT resource.

In a possible implementation, some carriers (namely, some serving cells in a protocol) of the MT of the IAB node are in inactive mode. In this case, the IAB node and the parent node of the IAB node consider all resources of the carriers of the MT as unavailable. In addition, the indication DCI may not indicate the carriers, the indication DCI always releases corresponding resources, or the IAB node ignores corresponding indication fields of the indication DCI.

The foregoing embodiments describe in detail the solution in which the parent node of the IAB node explicitly indicates only the availability status of the MT available resource of the IAB node, and implicitly indicates the availability status of the DU soft resource. The following describes in detail a design of a solution in which the parent node explicitly indicates only the availability status of the DU soft resource, and implicitly indicates the availability status of the MT available resource of the IAB node.

In a possible implementation, when the MT includes the plurality of carriers and the DU includes the plurality of cells, the parent node of the IAB node may directly explicitly indicate only the availability status of the DU soft resource of the IAB node, and the IAB node may determine the availability status of the MT available resource based on the indication. That is, the parent node of the IAB node indicates whether the IAB node may use a DU soft resource determined through the semi-static resource configuration to communicate with the child IAB node or the UE, and the IAB node derives the availability status of the MT available resource of the IAB node based on the indication (referred to as a DU indication for short below) of the parent node on the availability status of the DU soft resource. When the availability status of the MT available resource is determined, the resource multiplexing or association relationship between each carrier of the MT and each cell of the DU needs to be considered.

Specifically, when the DU of the IAB node has the plurality of cells, the indication DCI may selectively indicate availability of a soft resource of all or some of cells of the DU.

In a possible implementation, the indication DCI needs to indicate availability of resources of several slots or symbols of one or more cells of the DU. Optionally, the IAB node may ignore indication of some of the slots or symbols by the indication DCI. The part of the symbols or slots whose indication can be ignored include: a DU hard slot or symbol through semi-static signaling configuration, a DU unavailable slot or symbol through the semi-static signaling configuration, a slot or symbol configuring with a cell level signal or channel (including an SS/PBCH block, a PRACH resource), specified configuration resources, and the like. Herein, the specified configuration resources refer to resources additionally determined by the IAB node by using configuration signaling, and the IAB node ignores a dynamic indication of the resources by the indication DCI. In a possible implementation, the specified configuration resources are a segment of resources including a DU slot and resources after the DU slot, where the DU slot corresponds to an MT slot in which the IAB node receives the indication DCI. As shown in FIG. 8, the specified configuration resources may be a segment of resources between a DU slot 3 and a DU slot 0 corresponding to an MT slot 0 in which the IAB node receives the indication DCI. Configuring the specified configuration resources may implement the delay indication of dynamic indication, and improve flexibility of dynamic indication.

In a possible implementation, the specified configuration resources may be derived by remaining configuration information of the indication DCI. For example, the specified configuration resources may be derived based on a search space set cycle of the indication DCI and the indication range of the indication DCI. For example, it is assumed that the search space set cycle of the indication DCI is S slots, and the indication range of the indication DCI is P slots, so that a length of the specified configuration resources may be that P modulos S. For example, if a value of P is 48 slots, and a value of S is 20 slots, the length of the specified configuration resources is 8 slots (mod(48, 20) = 8). In addition, the length of the specified configuration resources may alternatively be P - n x S, where n is a positive integer greater than or equal to 1. For example, if the value of P is 24 slots, the value of S is 20 slots, and a value of n is 1, the length of the specified configuration resources is 4 slots. Similarly, the specified configuration resources are a segment of resources including the DU slot and the resources after the DU slot, where the DU slot corresponds to the MT slot in which the IAB node receives the indication DCI. For a specific example, refer to the descriptions in the foregoing paragraph. Details are not described herein again.

The following considers a relationship between a subcarrier spacing of an MT resource in which the indication DCI is received and a subcarrier spacing of a DU resource indicated by the indication DCI. The subcarrier spacing on which the MT receives the indication DCI, that is, a subcarrier spacing for configuring the IAB MT, is denoted as 15 × 2^{u₁} kHz. A reference subcarrier spacing on which the indication DCI indicates the DU is denoted as 15 × 2^{u₂} kHz. When u₁ = u₂, if an index of an MT slot in which the IAB node receives the indication DCI is T, an index of a corresponding DU slot is also T. When u₁ < u₂, if the index of the MT slot in which the IAB node receives the indication DCI is T, the index of the corresponding DU slot is T × 2^{u₂-u₁}. When u₁ > u₂, if the index of the MT slot in which the IAB node receives the indication DCI is T, the index of the corresponding DU slot is _{└}T × 2^{u₂-u₁}_{┘}, where _{└}·_{┘} indicates rounding down.

In a possible implementation, if a plurality of pieces of indication DCI indicates an availability status of a DU soft resource for a same time domain resource, the IAB node uses only an indication of first DCI for the resource, or the IAB node ignores indications of subsequent pieces of DCI for the resource. For example, both indication DCI #0 and indication DCI #1 indicate availability of a slot X, and a time domain position of a PDCCH carrying DCI #0 is earlier. In this case, the IAB node ignores an indication of DCI #1 for the slot X.

After receiving indication information for the DU sent by the parent node, the IAB node shall determine availability of resources of each carrier of the MT at different moments based on the resource multiplexing or association relationship between each carrier of the MT and each cell of the DU. For one carrier of the MT, an MT available time domain resource should not affect transmission of hard resources of all cells of the DU and soft resources indicated as available by the parent node. Herein, the method for determining the MT resource is similar to step S1002 in the foregoing embodiments. The difference is that in this embodiment, both the DU hard resources and the DU soft resources indicated as available by the parent node need to be considered.

An available/unavailable time domain resource of each carrier of the MT needs to be determined based on indications of a plurality of cells of the DU associated with each carrier of the MT, which is similar to the semi-static resource configuration. In other words, for one carrier of the MT, based on dynamic resource indication results of a plurality of cells of the DU associated with the carrier of the MT, an availability status of an available resource of the carrier of the MT should be determined, that is, whether the availability status of the MT available resource obtained through the semi-static resource configuration is modified to unavailable. When the availability status of the MT available resource is determined, the resource multiplexing or association relationship between each carrier of the MT and each cell of the DU needs to be considered.

In a possible implementation, the indication DCI may consider the carrier of the MT when indicating the availability status of the soft resource of the cell of the DU. For example, the indication DCI indicates availability statuses of soft resources of one or more cells of the DU associated with one or more carriers of the MT.

Specifically, when configuring indication DCI information, the parent node or the donor node may also configure a carrier of the MT associated with the DCI. In addition, the IAB node may further determine a cell of the DU corresponding to the indication DCI. The cell of the DU herein may be configured by the donor node or the parent node, may also be derived by the IAB node based on the associated carrier of the MT. For example, the indication DCI indicates a cell of the DU that has a TDM relationship with the associated carrier of the MT. Optionally, when there is no cell of the DU that has the TDM relationship with the associated carrier of the MT, the indication DCI indicates a cell of the DU that has an FDM/SDM relationship with the associated carrier of the MT.

For example, the configuration information of the indication DCI may include:

```
           {
          an identifier of the associated carrier;
          an identifier of the indicated cell of the DU;
           }
```

The identifier of the associated carrier of the MT may be an identifier of a carrier of the MT that has a resource multiplexing or association relationship with a cell of the DU on which the parent node performs dynamic resource indication, for example, a CC 1. The identifier of the indicated cell of the DU may be an identifier of the cell of the DU on which the parent node performs dynamic resource indication, for example, a cell 1. The identifier of the associated carrier of the MT is obtained by configuring by the parent node, and the identifier of the indicated cell of the DU may be obtained by configuring by the parent node, or may be obtained based on the identifier of the associated carrier of the MT and the resource multiplexing or association relationship between the carrier of the MT and the indicated cell of the DU. When the availability status of the soft resource of the cell of the DU is indicated, the identifier of the associated carrier of the MT is configured, so that the IAB node quickly obtains the availability status of the available resource of each carrier of the MT.

In a possible implementation, the indication DCI indicates both the availability status of the soft resource of the cell of the DU and the availability status of the available resource of the carrier of the MT.

For example, the configuration information of the indication DCI may further include:
Configuration information of the indication DCI:

```
           {
          an identifier of an indicated carrier of the MT;
          an identifier of an indicated cell of the DU;
           }
```

The identifier of an indicated carrier of the MT may be an identifier of a carrier of the MT on which the parent node performs dynamic resource indication, for example, a CC 2. The identifier of an indicated cell of the DU may be an identifier of a cell of the DU on which the parent node performs dynamic resource indication, for example, a cell 2. Both the identifier of an indicated carrier of the MT and the identifier of an indicated cell of the DU may be obtained by configuring by the parent node, and the parent node may indicate, by using the indication DCI, both availability statuses of resources of one or more carriers of the MT and availability statuses of resources of one or more cells of the DU. In the possible implementation, it is assumed that the indication DCI indicates availability of a resource of one carrier of the MT and availability of a resource of one cell of the DU. When the indicated carrier of the MT has a TDM association relationship with the cell of the DU, the indication DCI may indicate two statuses, for example, 0/1. (1) 0: The DU resource is unavailable and the MT resource is available. (2) 1: The DU resource is available and the MT resource is unavailable.

In conclusion, after the dynamic resource indication of the parent node is received, if the indication is the MT indication, that is, the parent node indicates the availability of the MT available resource of the IAB node, the IAB node should determine the availability of the soft resource of each cell of the DU based on the MT indication and the resource multiplexing or association relationship between each carrier of the MT and each cell of the DU. Use of the DU resources by the IAB node shall not affect use of the MT available resource indicated as available.

If the indication is the DU indication, that is, the parent node directly indicates the availability of the DU soft resource of the IAB node, the IAB node should determine the availability of the available resource of each carrier of the MT based on the DU indication and the resource multiplexing or association relationship between each carrier of the MT and each cell of the DU. Use of the MT resources by the IAB node shall not affect use of the DU hard resource and the soft resource indicated as available.

The IAB node may determine availability of each resource of each carrier of the MT whether the received dynamic resource indication of the parent node is the MT indication or the DU indication. For the MT available resource, behavior of the MT is similar to that of a common terminal device. For the MT unavailable resource, behavior of the MT needs to be defined. Details are as follows:

The MT of the IAB node does not expect the parent node to indicate the MT to perform PDSCH receiving, PUSCH sending, and HARQ-ACK feedback on the unavailable resource by using the DCI indication. However, it should be noted that the foregoing limitation may apply to only a part of transmission processes, for example, to only a process in which some RNTIs (for example, a C-RNTI, and an MCS-C-RNTI) scramble DCI of a CRC, and the DCI schedules a PDSCH or a PUSCH, indicates HARQ-ACK feedback, or the like. However, for a process in which other RNTIs (for example, SI-RNTIs) scramble the DCI of the CRC, and the DCI schedules transmission indicated by the PDSCH and the PUSCH, constraints thereof do not need to be met. In a possible implementation, the foregoing limitation applies to only a unicast PDSCH and PUSCH of the IAB node, and does not apply to broadcast PDSCH scheduling of the parent node.

Further, the MT of the IAB node may not send and receive a higher-layer configuration signal on an unavailable resource, and the higher-layer configuration signal may include one or more of the following: PDCCH monitoring, CSI-RS receiving, SRS sending, semi-static PDSCH, configuration-based PUSCH, and the like. For PDCCH monitoring, the MT may not monitor a part of PDCCHs only on the unavailable resource, for example, a UE-specific search space set or DCI corresponding to a dynamically scheduled unicast PDSCH/PUSCH. In other words, the MT may monitor, on the unavailable resource, a PDCCH corresponding to a broadcast channel. The MT does not monitor a process in which a specific RNTI scrambles DCI of a CRC. Similarly, the MT may not receive a UE-specific CSI-RS only on the unavailable resource.

It should be further noted that, when the MT has a plurality of carriers, availability statuses of a same time domain resource of different carriers may be different.

It should be understood that the MT behavior may be limited to only a specific MT mode. For example, the MT satisfies the foregoing behavior only when the MT is in RRC connected mode. When the MT is in idle or inactive mode, the MT may not be limited to the foregoing behavior.

It should be further understood that, in some cases, the IAB node MT may miss detecting a PDCCH corresponding to the indication DCI. In this case, the MT of the IAB node should assume that availability of all available resources determined through the semi-static configuration remains unchanged, and receive or send a corresponding backhaul link. However, the MT of the IAB node may have the following exception behavior: The IAB node may not perform SRS sending or configuration-based PUSCH sending on the available resources determined through the semi-static configuration.

This application provides the dynamic resource indication method of the MT resources of the IAB node and the DU resources of the IAB node. In an application scenario in which the MT includes the plurality of carriers and the DU includes the plurality of cells, the parent node of the IAB node may explicitly or implicitly indicate the availability status of the MT available resource of the IAB node, and explicitly or implicitly indicates the availability status of the DU soft resource of the IAB node. The parent node of the IAB node may alternatively explicitly indicate only the availability status of the MT available resource of the IAB node, and the IAB node may implicitly determine the availability status of the DU soft resource of the IAB node based on the indication. The parent node of the IAB node may alternatively explicitly indicate only the availability status of the DU soft resource of the IAB node, and the IAB node may implicitly determine the availability status of the MT available resource of the IAB node based on the indication. The technical solutions provided in this application may implement dynamic resource sharing between the MT resources and the DU resources of the IAB node.

The foregoing describes in detail the resource dynamic indication method provided in this application. The following describes a relay apparatus corresponding to a first node provided in this application.

FIG. 17 is a schematic block diagram of a structure of a relay apparatus 1700 provided in this application. As shown in FIG. 17, the relay apparatus 1700 includes a processing unit 1710 and a transceiver unit 1720.

The processing unit 1710 is configured to determine, based on first indication information, semi-static resource configuration on first resources corresponding to D carriers and second resources corresponding to F cells, where D ≥ 1 and F ≥ 1. The processing unit 1710 is further configured to determine, based on second indication information, an availability status of an available resource in the first resources corresponding to the D carriers and an availability status of a dynamic resource in the second resources corresponding to the F cells.

The transceiver unit 1720 is configured to receive the first indication information sent by a second node or a donor node, where the first indication information is used to indicate the semi-static resource configuration on the first resources corresponding to the D carriers in the first node and the second resources corresponding to the F cells in the first node, where D ≥ 1 and F ≥ 1. The transceiver unit is further configured to receive the second indication information sent by the second node, where the second indication information is used to indicate the availability status of the available resource in the first resources corresponding to the D carriers in the first node and the availability status of the dynamic resource in the second resources corresponding to the F cells in the first node.

Optionally, the apparatus 1700 may be a chip or an integrated circuit.

The chip in this embodiment of this application may be a field-programmable gate array (field-programmable gate array, FPGA), an application-specific integrated chip (application specific integrated circuit, ASIC), a system on chip (system on chip, SoC), a central processing unit (central processor unit, CPU), a network processor (Network Processor, NP), a digital signal processor (digital signal processor, DSP), or may be a microcontroller (micro controller unit, MCU), a programmable logic device (programmable logic device, PLD), or another integrated chip.

Optionally, the processing unit 1710 may be a processor. The transceiver unit 1710 may include a receiving unit and a sending unit. The transceiver unit 1720 may be a transceiver. The transceiver may include a transmitter and a receiver, and has both receiving and sending functions. Optionally, the transceiver unit 1710 may further be an input/output interface or an input/output circuit.

In another possible manner, the transceiver unit 1720 may be a communication interface, for example, an input/output interface, an input interface circuit, and an output interface circuit.

It should be understood that the apparatus 1700 may correspond to the first node or the IAB node in the dynamic resource indication method 1000 provided in the embodiments in FIG. 10 and another embodiment in this application. Units included in the apparatus 1700 are configured to implement corresponding operations and/or procedures performed by the first node or the IAB node in the method 1000 and another embodiment.

For example, the processing unit 1710 is further configured to implicitly determine an availability status of a DU soft resource based on an availability status of an MT available resource, or alternatively configured to implicitly determine the availability status of the MT available resource based on the availability status of the DU soft resource.

In addition, this application provides a computer-readable storage medium, and the computer-readable storage medium stores computer instructions. When the computer instructions are run on a computer, the computer is enabled to perform the corresponding operations and/or procedures performed by the first node or the IAB node in any method embodiment.

This application further provides a computer program product. The computer program product includes computer program code, and when the computer program code is run on a computer, the computer is enabled to perform the corresponding operations and/or procedures performed by the first node or the IAB node in any method embodiment in this application.

This application further provides a chip, including a processor. The processor is configured to invoke and run a computer program stored in a memory, to perform the corresponding operations and/or procedures performed by the first node in any method embodiment in this application.

Optionally, the chip further includes the memory, and the memory is connected to the processor. The processor is configured to read and execute the computer program in the memory.

Further, optionally, the chip further includes a communication interface, and the processor is connected to the communication interface. The communication interface is configured to receive a signal and/or data that need/needs to be processed. The processor obtains the signal and/or data from the communication interface, and processes the signal and/or data.

Optionally, the communication interface may be an input/output interface, and may specifically include an input interface and an output interface. Alternatively, the communication interface may be an input/output circuit, and may specifically include an input circuit and an output circuit.

The memory and the memory in the foregoing embodiments may be physically independent units, or the memory may be integrated with the processor.

In the foregoing embodiments, the processor may be a central processing unit (central processing unit, CPU), a microprocessor, an application-specific integrated circuit (application-specific integrated circuit, ASIC), one or more integrated circuits configured to control execution of programs in the technical solutions of this application, or the like. For example, the processor may be a digital signal processor device, a microprocessor device, an analog-to-digital converter, or a digital-to-analog converter. The processor may allocate control and signal processing functions of a terminal device or a network device among these devices based on respective functions of these devices. In addition, the processor may have a function of operating one or more software programs, and the software program may be stored in the memory. The functions of the processor may be implemented by hardware, or may be implemented by hardware executing corresponding software. The hardware or the software includes one or more modules corresponding to the foregoing functions.

The memory may be a read-only memory (read-only memory, ROM), another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, any other medium that can be used to carry or store expected program code in a form of an instruction or a data structure and that can be accessed by a computer, or the like.

In the embodiments of this application, the term "and/or" describes an association relationship for describing associated objects and represents that three relationships may exist. For example, A and/or B may represent the following three cases: Only A exists, both A and B exist, and only B exists. A and B may be in a singular form or a plural form.

A person of ordinary skill in the art may be aware that, in combination with the examples described in the embodiments disclosed in this specification, units may be implemented by electronic hardware or a combination of computer software and electronic hardware. Whether the functions are performed by hardware or software depends on particular applications and design constraints of the technical solutions. A person skilled in the art may use different methods to implement the described functions for each specific application.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual coupling or direct coupling or communication connections may be implemented through some interfaces. The indirect coupling or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource dynamic indication method, wherein the method comprises:
receiving, by a first node, first indication information sent by a second node or a donor node, wherein the first indication information is used to indicate semi-static resource configuration on first resources corresponding to D carriers in the first node and second resources corresponding to F cells in the first node, wherein D ≥ 1 and F ≥ 1;
determining, by the first node based on the first indication information, the semi-static resource configuration on the first resources corresponding to the D carriers and the second resources corresponding to the F cells;
receiving, by the first node, second indication information sent by the second node, wherein the second indication information is used to indicate an availability status of an available resource in the first resources corresponding to the D carriers in the first node and an availability status of a dynamic resource in the second resources corresponding to the F cells in the first node; and
determining, by the first node based on the second indication information, the availability status of the available resource in the first resources corresponding to the D carriers and the availability status of the dynamic resource in the second resources corresponding to the F cells.

2. The method according to claim 1, wherein the method further comprises:
receiving, by the first node, the second indication information sent by the second node, wherein the second indication information is used to indicate the availability status of the available resource in the first resources corresponding to the D carriers in the first node;
determining, by the first node based on the second indication information, the availability status of the available resource in the first resources corresponding to the D carriers; and
determining, by the first node, the availability status of the dynamic resource in the second resources corresponding to the F cells based on the availability status of the available resource in the first resources corresponding to the D carriers and resource multiplexing relationships between the first resources corresponding to the D carriers and the second resources corresponding to the F cells.

3. The method according to claim 1 or 2, wherein the method further comprises:
receiving, by the first node, the second indication information sent by the second node, wherein the second indication information is used to indicate the availability status of the dynamic resource in the second resources corresponding to the F cells in the first node;
determining, by the first node based on the second indication information, the availability status of the dynamic resource in the second resources corresponding to the F cells; and
determining, by the first node, the availability status of the available resource in the first resources corresponding to the D carriers based on the availability status of the dynamic resource in the second resources corresponding to the F cells and the resource multiplexing relationships between the first resources corresponding to the D carriers and the second resources corresponding to the F cells.

4. The method according to any one of claim s 1 to 3, wherein the second node is a parent node of the first node, the first resources are transmission resources for communication between the first node and the second node, the second resources are transmission resources for communication between the first node and a third node, and the third node is a child node of the first node.

5. The method according to any one of claims 1 to 4, wherein the available resource in the first resources is an available resource determined after the semi-static resource configuration is performed on the first resources.

6. The method according to any one of claims 1 to 5, wherein the dynamic resource in the second resources is a dynamic resource determined after the semi-static resource configuration is performed on the second resources.

7. The method according to any one of claims 1 to 6, wherein the resource multiplexing relationships between the first resources corresponding to the D carriers and the second resources corresponding to the F cells comprise at least one of the following:
time division multiplexing, half-duplex frequency division multiplexing, half-duplex space division multiplexing, full duplex, dynamic adaptive frequency division multiplexing, dynamic adaptive space division multiplexing, or dynamic adaptive full duplex.

8. The method according to claim 2, wherein an indication range of the second indication information comprises at least one of the following:
the available resource in the first resources determined through the semi-static resource configuration;
a first to-be-indicated resource set comprising a resource that is determined by specified G cells in the F cells and that has the resource multiplexing relationship with the G cells;
a second to-be-indicated resource set comprising a part of resources that are indicated by the second node or the donor node and that are in the first resources; or
a third to-be-indicated resource set comprising all resources that are indicated by the second node or the donor node and that are in the first resources.

9. The method according to any one of claims or 1 to 8, wherein the second indication information comprises identifiers of the D carriers and/or identifiers of the F cells.

10. The method according to any one of claims 1 to 9, wherein the second indication information is downlink control information (DCI).

11. The method according to any one of claims 1 to 10, wherein the downlink control information (DCI) further comprises at least one type of the following information: control resource set information, search space set information, indication delay information, or indication range information.

12. A relay apparatus, comprising:
a transceiver unit, configured to receive first indication information sent by a second node or a donor node, wherein the first indication information is used to indicate semi-static resource configuration on first resources corresponding to D carriers in the first node and second resources corresponding to F cells in the first node, wherein D ≥ 1 and F ≥ 1; wherein
the transceiver unit is further configured to receive second indication information sent by the second node, wherein the second indication information is used to indicate an availability status of an available resource in the first resources corresponding to the D carriers in the first node and an availability status of a dynamic resource in the second resources corresponding to the F cells in the first node; and
a processing unit, configured to determine, based on the first indication information, the semi-static resource configuration on the first resources corresponding to the D carriers and the second resources corresponding to the F cells, wherein
the processing unit is further configured to determine, based on the second indication information, the availability status of the available resource in the first resources corresponding to the D carriers and the availability status of the dynamic resource in the second resources corresponding to the F cells.

13. The method according to claim 12, wherein
the transceiver unit is further configured to receive the second indication information sent by the second node, wherein the second indication information is used to indicate the availability status of the available resource in the first resources corresponding to the D carriers in the first node;
the processing unit is further configured to determine, based on the second indication information, the availability status of the available resource in the first resources corresponding to the D carriers; and
the processing unit is further configured to determine the availability status of the dynamic resource in the second resources corresponding to the F cells based on the availability status of the available resource in the first resources corresponding to the D carriers and resource multiplexing relationships between the first resources corresponding to the D carriers and the second resources corresponding to the F cells.

14. The method according to claim 12 or 13, wherein
the transceiver unit is further configured to receive the second indication information sent by the second node, wherein the second indication information is used to indicate the availability status of the dynamic resource in the second resources corresponding to the F cells in the first node;
the processing unit is further configured to determine, based on the second indication information, the availability status of the dynamic resource in the second resources corresponding to the F cells; and
the processing unit is further configured to determine the availability status of the available resource in the first resources corresponding to the D carriers based on the availability status of the dynamic resource in the second resources corresponding to the F cells and the resource multiplexing relationships between the first resources corresponding to the D carriers and the second resources corresponding to the F cells.

15. The method according to any one of claims 12 to 14, wherein the second node is a parent node of the relay apparatus, the first resources are transmission resources for communication between the relay apparatus and the second node, the second resources are transmission resources for communication between the relay apparatus and a third node, and the third node is a child node of the relay apparatus.

16. The method according to any one of claims 12 to 15, wherein the available resource in the first resources is an available resource determined after the semi-static resource configuration is performed on the first resources.

17. The method according to any one of claims 12 to 16, wherein the dynamic resource in the second resources is a dynamic resource determined after the semi-static resource configuration is performed on the second resources.

18. The method according to any one of claims 12 to 17, wherein the resource multiplexing relationships between the first resources corresponding to the D carriers and the second resources corresponding to the F cells comprise at least one of the following:
time division multiplexing, half-duplex frequency division multiplexing, half-duplex space division multiplexing, full duplex, dynamic adaptive frequency division multiplexing, dynamic adaptive space division multiplexing, or dynamic adaptive full duplex.

19. A computer-readable storage medium, wherein the computer-readable storage medium stores computer instructions; and when the computer instructions are run on a computer, the computer is enabled to perform the method according to any one of claims 1 to 11.

20. A chip, comprising a memory and a processor, wherein the memory is configured to store a computer program, and the processor is configured to read and execute the computer program stored in the memory, to perform the method according to any one of claims 1 to 11.
